(19) Europäisches Patentamt / European Patent Office / Office européen des brevets

(11) **EP 2 784 547 B1**

(12) **FASCICULE DE BREVET EUROPEEN**

(45) Date de publication et mention
de la délivrance du brevet:
**29.07.2015   Bulletin 2015/31**

(51) Int Cl.:
***G01S 19/21*** *(2010.01)*

(21) Numéro de dépôt: **14160756.4**

(22) Date de dépôt: **19.03.2014**

(54) **Procédé de détection de signaux destinés à leurrer un récepteur de signaux d'un système de navigation par satellites et récepteur associé**

Verfahren zum Nachweis von Signalen zu täuschen einen Signalempfänger eines Satellitennavigationssystem -Empfänger und entsprechende Empfänger konzipiert

Method of detecting signals designed for deceiving a signal receiver of a satellite navigation system receiver and corresponding receiver

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **27.03.2013   FR 1300712**

(43) Date de publication de la demande:
**01.10.2014   Bulletin 2014/40**

(73) Titulaire: **Thales**
**92200 Neuilly Sur Seine (FR)**

(72) Inventeurs:
• **Martin, Nicolas**
**26500 Bourg Les Valence (FR)**
• **Perre, Jean-Michel**
**07130 St Peray (FR)**
• **Chopard, Vincent**
**07300 Mauves (FR)**

(74) Mandataire: **Brunelli, Gérald et al**
**Marks & Clerk France**
**Immeuble Visium**
**22, avenue Aristide Briand**
**94117 Arcueil Cedex (FR)**

(56) Documents cités:
**EP-A1- 2 523 020     US-A1- 2012 326 925**
**US-B1- 7 912 643**

• **BROWN ALISON ET AL: "Detection and Location of GPS Interference Sources Using Digital Receiver Electronics", 56TH AM - PROCEEDINGS OF THE IAIN WORLD CONGRESS AND THE 56TH ANNUAL MEETING OF THE INSTITUTE OF NAVIGATION, THE INSTITUTE OF NAVIGATION, 8551 RIXLEW LANE SUITE 360 MANASSAS, VA 20109, USA, 28 juin 2000 (2000-06-28), pages 269-274, XP056001191,**

EP 2 784 547 B1

**Description**

La présente invention porte sur un procédé et système de détection de signaux leurrés d'un système de navigation par satellites de signaux reçus par un récepteur muni d'un réseau d'antennes à rayonnement contrôlé.

La radionavigation par satellites permet d'obtenir la position d'un récepteur par une résolution voisine de la triangulation, utilisant les pseudo-distances mesurées à partir des signaux envoyés par les satellites.

Les signaux civils émis par les satellites sont prévisibles donc reproductibles. Cela constitue une menace pour les utilisateurs car il est de ce fait possible de générer des signaux pirates ou leurrés ressemblant aux signaux des satellites. Lorsqu'un récepteur s'accroche dessus il mesurerait alors une position erronée, ce qui peut avoir de graves conséquences s'il s'agit d'un avion.

Il est connu plusieurs procédés pour détecter une tentative de leurre de signaux satellitaires ou leurrage.

Le document US 7912643 B1 décrit un système de localisation d'un dispositif de leurre de signaux satellitaires. Ce système compare l'emplacement de la source du signal de leurre à l'information de localisation des sources réelles des signaux stockées en base de données pour vérifier que le signal de leurre ne provient pas de l'une des véritables sources des signaux. Ce système est de fiabilité limitée.

Un procédé consiste à détecter une similitude sur les profils de rapports signaux à bruit mesurés sur les signaux satellites. Ce procédé ne fonctionne que dans des environnements avec des obstacles générant des atténuations, masquages et multi-trajets intempestifs, comme en ville. En outre, si les signaux de leurrage sont modulés suivant des profils temporels différents des puissances de chaque signal satellite généré, alors la détection ne verra rien.

Un autre procédé consiste à utiliser la différence d'effet Doppler en fonction des directions d'arrivée des signaux satellitaires, dont un exemple est décrit dans le document Le document "Detection and Location of GPS Interferencesources using digital receiver electronics" d'Alison Brown, Sheryl Atterberg et Neil Gerein-Proceedings of the IAIN World Congress and the Institute of Navigation. Si les effets Doppler ne sont pas cohérents avec la vitesse estimée par le récepteur alors il y détection de leurrage. Cependant il est facile pour le dispositif de leurrage de générer des signaux donnant des mesures d'effet Doppler cohérents dans le récepteur. Ce dernier mesure alors une position et une vitesse erronées sans voir d'incohérence sur les mesures.

L'utilisation d'une antenne à plusieurs capteurs permet de mesurer les directions d'arrivées des signaux grâce aux déphasages et de vérifier qu'elles sont cohérentes par rapport aux positions des satellites et à l'attitude de l'antenne supposée connue. Selon l'état de l'art ce dernier procédé utilise un traitement du signal séparé entre les capteurs et ne bénéficie pas de la redondance des signaux pour améliorer la robustesse de la démodulation.

Un but de l'invention est de pallier cet inconvénient.

Il est proposé, selon un aspect de l'invention, un procédé de détection de signaux destinés à leurrer un récepteur de signaux d'un système de navigation par satellites, le récepteur étant muni d'une antenne à capteurs à rayonnement contrôlé, comprenant les étapes suivantes consistant à, pour chaque satellite :

-    calculer la position du satellite dans un premier repère TGL centré sur le récepteur à partir de la position du récepteur et de la position du satellite;
-    déterminer l'attitude de l'antenne dans le premier repère;
-    calculer des premiers angles de site et d'azimut du satellite dans un deuxième repère lié à l'antenne, à partir de la position du satellite dans le premier repère et de l'attitude de l'antenne dans le premier repère;
-    déterminer des deuxièmes angles de site et d'azimut du satellite dans le deuxième repère, par recherche itérative d'un maximum d'une somme complexe pondérée des signaux démodulés reçus par l'antenne;
-    calculer la valeur d'une fonction de vraisemblance entre les premiers angles de site et d'azimut du satellite et les deuxièmes angles de site et d'azimut du satellite; et
-    détecter un risque de réception de signaux leurrés lorsque ladite valeur de la fonction de vraisemblance est inférieure à un seuil.

Un tel procédé permet donc de nettement améliorer la détection de signaux émis dans le but de leurrer le récepteur de signaux d'un système de navigation par satellites, et ainsi éviter de graves conséquences à l'utilisateur du récepteur, notamment dans le cas d'un aéronef.

Dans un mode de mise en oeuvre, ladite recherche itérative d'un maximum d'une somme complexe pondérée des signaux démodulés reçus par l'antenne est effectuée à partir d'un discriminateur d'angle de site et d'un discriminateur d'angle d'azimut.

Ainsi, le procédé permet d'améliorer la robustesse au brouillage grâce à la redondance des capteurs de l'antenne.

Selon un mode de mise en oeuvre, l'étape de détermination de l'attitude de l'antenne dans le premier repère utilise des données fournies par une référence inertielle.

L'attitude est ainsi non leurrable.

Dans un mode de mise en oeuvre, l'étape de détermination de l'attitude de l'antenne dans le premier repère utilise ladite détermination des deuxièmes angles de site et d'azimut des satellites dans le deuxième repère et procède par une recherche itérative des angles d'attitude de l'antenne donnant le minimum de la fonction de vraisemblance. Ainsi, il n'y a pas besoin de référence inertielle.

Selon un mode de mise en oeuvre, l'étape de détermination de l'attitude de l'antenne dans le premier repère procède par une recherche itérative des angles d'attitude de l'antenne donnant le maximum d'énergie après les sommes pondérées en sortie des corrélateurs des canaux de traitement respectivement associés aux satellites. Ainsi, on améliore la robustesse au brouillage.

Dans un mode de mise en oeuvre, ladite maximisation utilise une méthode de résolution par les moindres carrés. Cette mise en oeuvre est simple.

Selon un mode de mise en oeuvre, ladite maximisation utilise une méthode de résolution par filtrage de Kalman.

Une telle mise en oeuvre permet d'augmenter la précision et la robustesse au brouillage.

Dans un mode de mise en oeuvre, on utilise des discriminateurs à base de cosinus directeurs représentatifs de la position des satellites dans le deuxième repère lié à l'antenne.

Dans un mode de mise en oeuvre, on utilise une méthode à modèle d'observation de la relation entre les cosinus directeurs des directions des satellites et les angles d'Euler des directions des satellites.

Il est également proposé, selon un autre aspect de l'invention, un récepteur de signaux d'un système de navigation par satellites, muni d'une antenne à capteurs à rayonnement contrôlé, comprenant, pour chaque satellite :

- des moyens de calcul de la position du satellite dans un premier repère TGL centré sur le récepteur à partir de la position du récepteur et de la position du satellite;
- des moyens de détermination de l'attitude de l'antenne dans le premier repère
- des moyens de détermination des premiers angles de site et d'azimut du satellite dans un deuxième repère lié à l'antenne, à partir de la position du satellite dans le premier repère et de l'attitude de l'antenne dans le premier repère;
- des moyens de détermination des deuxièmes angles de site et d'azimut du satellite dans le deuxième repère, par recherche itérative d'un maximum d'une somme complexe pondérée des signaux démodulés reçus par l'antenne;
- des moyens de calcul de la valeur d'une fonction de vraisemblance entre les premiers angles de site et d'azimut du satellite et les deuxièmes angles de site et d'azimut du satellite; et
- des moyens de détection d'un risque de réception de signaux leurrés lorsque ladite valeur de la fonction de vraisemblance est inférieure à un seuil.

L'invention sera mieux comprise à l'étude de quelques modes de réalisation décrits à titre d'exemples nullement limitatifs et illustrés par les dessins annexés sur lesquels :

- la figure 1 illustre schématiquement un procédé de détection de leurrage, selon un aspect de l'invention;
- la figure 2 illustre les angles d'Euler;
- la figure 3 illustre une antenne à quatre capteurs;
- la figure 4 illustre une démodulation avec boucles de poursuite;
- la figure 5 illustre la détermination des angles de site et d'azimut, selon un aspect de l'invention;
- la figure 6 illustre un contrôle de cohérence sur les directions des satellites, selon un aspect de l'invention;
- les figures 7, 8, 9 et 10 illustrent la détermination de l'attitude de l'antenne à partir des directions satellites mesurées;
- la figure 11 illustre un synoptique du procédé selon un aspect de l'invention; et
- la figure 12 illustre un récepteur selon un aspect de l'invention.

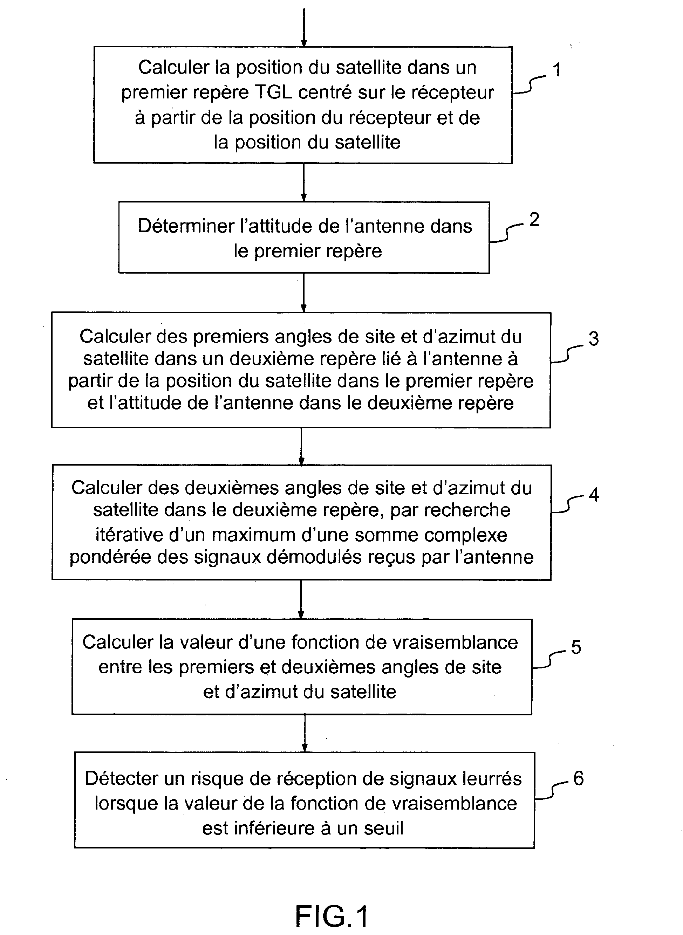

Sur la figure 1, est illustré un procédé de détection de signaux destinés à leurrer un récepteur de signaux d'un système de navigation par satellites, selon un aspect de l'invention, le récepteur étant muni d'une antenne à capteurs à rayonnement contrôlé.

Le procédé comprend, pour chaque satellite du système de navigation par satellite les étapes qui suivent :

On calcule, dans une étape 1, la position du satellite dans un premier repère TGL (Trièdre Géographique Local, repère Nord, Est, Vertical centré sur la position du récepteur) centré sur le récepteur à partir de la position du récepteur et de la position du satellite. Les positions du récepteur et du satellite sont connues grâce aux éphémérides ou aux almanachs, contenus dans les messages de navigation transmis par les signaux émis par les satellites.

On détermine, dans une étape 2, l'attitude, ou orientation définie par trois angles, de l'antenne dans le premier repère. Cela peut être fait de plusieurs manières, comme décrit ultérieurement dans la présente demande de brevet.

On détermine, lors d'une étape 3, des premiers angles de site et d'azimut du satellite dans un deuxième repère lié à l'antenne, à partir de la position du satellite dans le premier repère et de l'attitude de l'antenne dans le premier repère. On détermine, dans un étape 4, des deuxièmes angles de site et d'azimut du satellite dans le deuxième repère, par recherche itérative d'un maximum d'une somme complexe pondérée des signaux démodulés reçus par l'antenne. Cette étape peut être réaliser de différentes manières, comme décrit ultérieurement dans la présente demande.

On calcule, dans un étape 5, la valeur d'une fonction de vraisemblance entre les premiers angles de site et d'azimut du satellite et les deuxièmes angles de site et d'azimut du satellite.

Enfin, on détecte, lors d'une étape 6, un risque de réception de signaux leurrés lorsque la valeur de la fonction de vraisemblance est inférieure à un seuil.

Le vecteur directeur entre l'antenne du récepteur et le satellite d'indice n du système de navigation par satellites, dans le premier repère TGL, est égal par définition à :

$$\vec{u}_{n\,TGL} \overset{def}{=} \begin{bmatrix} X_{n\,TGL} \\ Y_{n\,TGL} \\ Z_{n\,TGL} \end{bmatrix} / \rho$$

Le dénominateur $\rho$ représente la distance séparant l'antenne du récepteur et le satellite n, indépendante du repère :

$$\rho \overset{def}{=} \sqrt{X_n{}^2 + Y_n{}^2 + Z_n{}^2} = \sqrt{X_{n\,TGL}{}^2 + Y_{n\,TGL}{}^2 + Z_{n\,TGL}{}^2}$$

Dans l'ensemble de la présente demande, la présence d'un indice def au-dessus d'un signe d'égalité dans une expression mathématique signifie une égalité par définition et non par conséquence.

Les positions des satellites $(X_{n\,TGL}, Y_{n\,TGL}, Z_{n\,TGL})$ en repère TGL sont calculées grâce aux éphémérides.

L'étape 2 de détermination de l'attitude de l'antenne utilise traditionnellement une référence inertielle d'attitude et de cap, d'acronyme AHRS pour "Attitude and Heading Reference System" en langue anglaise, hybridée avec d'autres capteurs (anémométrie, GPS, radar Doppler,...) ou par une référence inertielle autonome (IRS - Inertial Reference System).

Il est aussi possible de déterminer l'attitude de l'antenne du récepteur grâce aux signaux émis par les satellites eux-mêmes, qui arrivent avec des déphasages différents sur les capteurs de l'antenne, en fonction de la direction incidente. Plusieurs variantes sont décrites dans la suite de la description.

L'étape 3 de calcul des directions des satellites dans le deuxième repère lié à l'antenne dit repère antenne ou repère capteur, peut être réalisée comme suit :

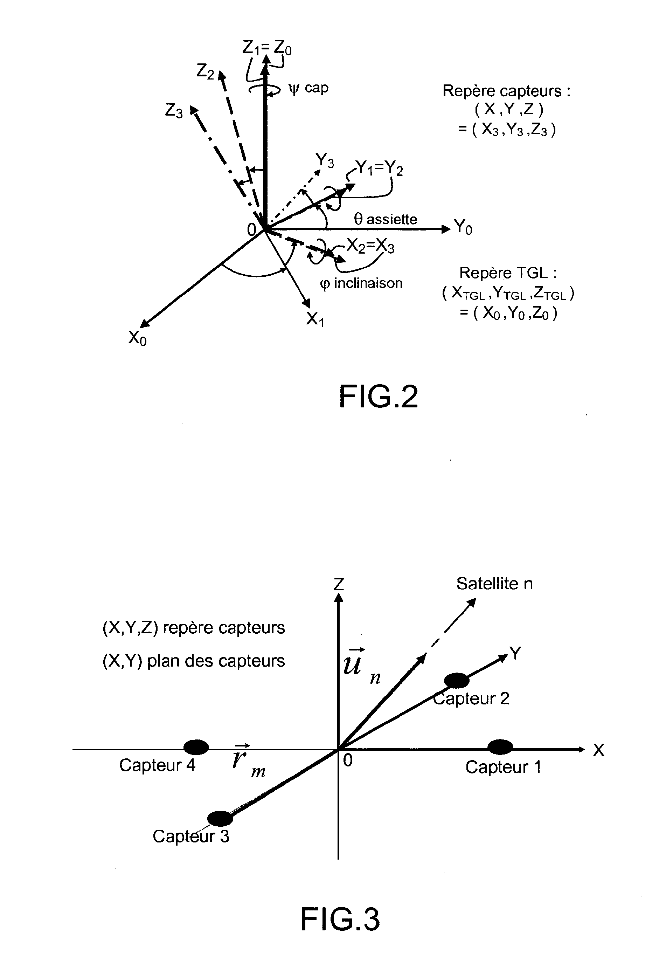

On représente, comme sur la figure 2, l'attitude de l'antenne par rapport au premier repère TGL grâce aux angles d'Euler : Cap ($\psi$), Assiette ($\theta$) et Inclinaison ($\varphi$). Ces angles permettent de construire la matrice de changement de repère M($\psi$), $\theta$, $\varphi$) du premier repère TGL au deuxième repère lié à l'antenne ou aux capteurs d'antenne (idem) :

$$M(\psi,\theta,\varphi) \overset{def}{=} \begin{bmatrix} 1 & 0 & 0 \\ 0 & \cos\varphi & -\sin\varphi \\ 0 & \sin\varphi & \cos\varphi \end{bmatrix} \begin{bmatrix} \cos\theta & 0 & -\sin\theta \\ 0 & 1 & 0 \\ \sin\theta & 0 & \cos\theta \end{bmatrix} \begin{bmatrix} \cos\psi & \sin\psi & 0 \\ -\sin\psi & \cos\psi & 0 \\ 0 & 0 & 1 \end{bmatrix}$$

$$\begin{bmatrix} X_{capteur} \\ Y_{capteur} \\ Z_{capteur} \end{bmatrix} = M(\psi,\theta,\varphi) \cdot \begin{bmatrix} X_{TGL} \\ Y_{TGL} \\ Z_{TGL} \end{bmatrix}$$

Le vecteur directeur entre l'antenne du récepteur et le satellite d'indice n du système de navigation par satellites, dans le deuxième repère lié à l'antenne, est égal par définition à :

$$\vec{u}_{n\,capteur} \overset{def}{=} \begin{bmatrix} X_{n\,capteur} \\ Y_{n\,capteur} \\ Z_{n\,capteur} \end{bmatrix} / \rho$$

Le dénominateur $\rho$ représente la distance séparant l'antenne du récepteur et le satellite n, indépendante du repère :

$$\rho = \sqrt{X_n^{\;2} + Y_n^{\;2} + Z_n^{\;2}} = \sqrt{X_{n\,capteur}^{\;2} + Y_{n\,capteur}^{\;2} + Z_{n\,capteur}^{\;2}}$$

On peut ainsi exprimer le vecteur directeur du satellite d'indice n en fonctions des angles d'Euler :

$$\vec{u}_{n\,capteurs}(\psi,\theta,\varphi) = M(\psi,\theta,\varphi) . \vec{u}_{n\,TGL}$$

$$\vec{u}_{n\,capteurs}(\psi,\theta,\varphi) \overset{def}{=} \begin{bmatrix} ux_n(\psi,\theta,\varphi) \\ uy_n(\psi,\theta,\varphi) \\ uz_n(\psi,\theta,\varphi) \end{bmatrix}$$

On calcule alors, dans l'étape 2, dans le deuxième repère lié à l'antenne, les angles de site $\gamma_n$ et d'azimut $\alpha_n$ à partir des angles d'attitude de l'antenne (ou des capteurs) dans le deuxième repère :

$$\vec{u}_{n\,capteurs}(\psi,\theta,\varphi) \overset{def}{=} \begin{bmatrix} \cos(\gamma_n).\cos(\sigma_n) \\ \sin(\gamma_n).\cos(\sigma_n) \\ \sin(\sigma_n) \end{bmatrix} \overset{def}{=} \begin{bmatrix} ux_n(\psi,\theta,\varphi) \\ uy_n(\psi,\theta,\varphi) \\ uz_n(\psi,\theta,\varphi) \end{bmatrix}$$

L'angle de site en repère antenne ou capteur s'écrit :

$$\sigma_n(\psi,\theta,\varphi) = \sin^{-1}( uz_n(\psi,\theta,\varphi) )$$

L'angle d'azimut en repère antenne ou capteur s'écrit :

$$\gamma_n(\psi,\theta,\varphi) = \tan^{-1}( ux_n(\psi,\theta,\varphi) , uy_n(\psi,\theta,\varphi) )$$

Le vecteur directeur calculé à partir des angles de site et d'azimut variables s'écrit alors :

$$\vec{u}_{capteurs}(\sigma,\gamma) \overset{def}{=} \begin{bmatrix} \cos(\gamma).\cos(\sigma) \\ \sin(\gamma).\cos(\sigma) \\ \sin(\sigma) \end{bmatrix} \overset{def}{=} \begin{bmatrix} ux(\sigma,\gamma) \\ uy(\sigma,\gamma) \\ uz(\sigma,\gamma) \end{bmatrix}$$

On peut également prendre comme paramètres de direction les cosinus directeurs sur les axes X et Y du repère antenne ou repère capteur. Le cosinus directeur sur l'axe Z se déduit grâce à la norme égale à 1.
Pour éviter toute ambiguïté sur le signe de Z il faut supposer que les satellites se trouvent toujours au-dessus du plan de l'antenne, donc ignorer les satellites en-dessous. Cela est légitime dans la mesure où les satellites bas en repère capteur ne sont pas exploitables pour la détermination des directions d'arrivée à cause de gains d'antenne inadaptés à un angle de site bas.

$$\vec{u}_{capteurs}(\alpha,\beta) \overset{def}{=} \begin{bmatrix} \alpha \\ \beta \\ \sqrt{1-\alpha^2-\beta^2} \end{bmatrix} \overset{def}{=} \begin{bmatrix} ux(\alpha,\beta) \\ uy(\alpha,\beta) \\ uz(\alpha,\beta) \end{bmatrix}$$

L'angle de site en repère antenne ou capteur s'écrit :

$$\sigma(\alpha,\beta) = \tan^{-1}(\sqrt{\alpha^2+\beta^2}, \sqrt{1-\alpha^2+\beta^2})$$

L'angle d'azimut en repère capteur s'écrit :

$$\gamma(\alpha,\beta) = \tan^{-1}(\alpha, \beta)$$

En notant $\vec{r}_{m\,capteurs} \overset{def}{=} \begin{bmatrix} X_{m\,capteur} \\ Y_{m\,capteur} \\ Z_{m\,capteur} \end{bmatrix}$ le vecteur position du capteur m en repère capteurs, connu par exemple grâce à des mesures de centre de phase en usine, dans un exemple à quatre capteurs d'antenne, on a :

$$\vec{r}_{1\,capteurs} = \begin{bmatrix} r \\ 0 \\ 0 \end{bmatrix} \quad \vec{r}_{2\,capteurs} = \begin{bmatrix} 0 \\ r \\ 0 \end{bmatrix} \quad \vec{r}_{3\,capteurs} = \begin{bmatrix} -r \\ 0 \\ 0 \end{bmatrix} \quad \vec{r}_{4\,capteurs} = \begin{bmatrix} 0 \\ -r \\ 0 \end{bmatrix}$$

comme illustré sur la figure 3.

Les déphasages supposés des signaux reçus entre les capteurs d'antenne sont calculés à partir des angles de site et d'azimut variables.

La différence de chemin optique entre le centre du deuxième repère antenne et le capteur d'indice m pour le signal reçu du satellite n s'exprime comme suit :

$$\varepsilon_{m,n}(\psi,\theta,\varphi) \overset{def}{=} \vec{u}_{n\,capteurs}(\psi,\theta,\varphi) \cdot \vec{r}_{m\,capteurs} \qquad \text{(en m)}$$

Le déphasage correspondant s'exprime comme suit :

$$\delta_{m,n}(\psi,\theta,\varphi) \overset{def}{=} \vec{u}_{n\,capteurs}(\psi,\theta,\varphi) \cdot \vec{r}_{m\,capteurs} \cdot (2\pi/\lambda) \qquad \text{(en rad)}$$

$\lambda$ représentant la longueur d'onde de la porteuse

On peut alors calculer le déphasage pour des angles de site et d'azimut variables $\sigma,\gamma$. On calcule alors la différence de chemin optique :

$$\varepsilon_m(\sigma,\gamma) \overset{def}{=} \vec{u}_{capteurs}(\sigma,\gamma) \cdot \vec{r}_{m\,capteurs} \qquad \text{(en m)}$$

et le déphasage correspondant :

$$\delta_m(\sigma,\gamma) \overset{def}{=} \vec{u}_{capteurs}(\sigma,\gamma) \,.\, \vec{r}_{m\,capteurs} \,.\, (2\pi/\lambda) \qquad \text{(en rad)}$$

L'utilisation de l'indice n car la position du satellite n'intervient plus à partir du moment où on a les angles de site et d'azimut en deuxième repère capteur.

On calcule le déphasage pour des cosinus directeurs variables. On commence par le calcul de différence de chemin optique :

$$\varepsilon_m(\alpha,\beta) \overset{def}{=} \vec{u}_{capteurs}(\alpha,\beta) \,.\, \vec{r}_{m\,capteurs} \qquad \text{(en m)}$$

et le déphasage correspondant :

$$\delta_m(\alpha,\beta) \overset{def}{=} \vec{u}_{capteurs}(\alpha,\beta) \,.\, \vec{r}_{m\,capteurs} \,.\, (2\pi/\lambda) \qquad \text{(en rad)}$$

L'utilisation de l'indice n disparaît car la position du satellite n'intervient plus à partir du moment où on utilise les angles de site et d'azimut variables.

La démodulation des signaux, numérisés à la fréquence d'échantillonnage Fe, est réalisée de manière matérielle, dans un composant numérique "câblé", ASIC ou FPGA. Elle demande une fréquence de calcul très élevée, difficile à réaliser de manière logicielle.

La démodulation est propre à chaque signal satellite, caractérisé par son code d'étalement et son Doppler. Dans la présente demande, on démodule tous les signaux reçus par les capteurs en parallèle dans chaque canal satellite matérielle.

La démodulation procède par multiplication du signal reçu par une porteuse locale complexe et par un code local réel puis intégration du produit par intervalles de temps consécutifs (c'est la corrélation). On a en fait deux voies de corrélation par signal reçu : une voie ponctuelle avec un code local en phase avec le code reçu et une voie delta avec un code "delta" ou différence entre code avancé et code retardé, selon l'état de l'art.

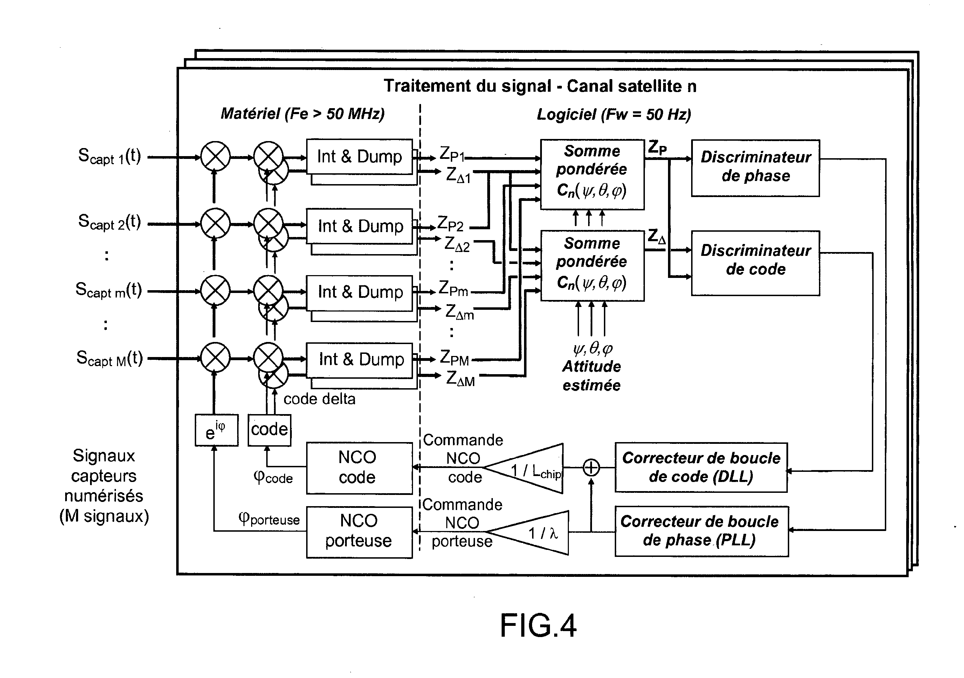

La figure 4 représente un exemple de démodulation avec les boucles de poursuite.

Les sommes pondérées des signaux démodulés des différents capteurs sont réalisées en logiciel à basse fréquence (typiquement Fw = 50 Hz).

Les coefficients de pondération complexes ont pour rôle de mettre en phase les signaux des capteurs en sortie des voies de corrélation dans le but d'avoir le maximum d'amplitude après la somme.

On utilise les directions des satellites calculées à partir des angles de site et d'azimut pour déterminer les coefficients de pondération.

Les résultats en sortie des corrélateurs avant pondération s'écrivent :

$$Z_{P\,capteurs} \overset{def}{=} \begin{bmatrix} Z_{P1} \\ Z_{P2} \\ Z_{P3} \\ \vdots \\ Z_{PM} \end{bmatrix}_{M\,x\,1} \qquad Z_{\Delta\,capteurs} \overset{def}{=} \begin{bmatrix} Z_{\Delta1} \\ Z_{\Delta2} \\ Z_{\Delta3} \\ \vdots \\ Z_{\Delta M} \end{bmatrix}_{M\,x\,1}$$

La pondération sur la voie ponctuelle s'écrit alors :

$$Z_P \overset{def}{=} C_n{}^T(\psi,\theta,\varphi) \,.\, Z_{P\,capteurs} \qquad \text{(produit scalaire)}$$

$$Z_P \overset{def}{=} C_{1,n}(\psi,\theta,\varphi).\, Z_{P1} + C_{2,n}(\psi,\theta,\varphi).\, Z_{P2} + \ldots + C_{M,n}(\psi,\theta,\varphi).\, Z_{PM}$$

La pondération sur la voie Delta (discriminateur de code) s'écrit alors :

$$Z_\Delta \overset{def}{=} C_n^{\mathrm{T}}(\psi,\theta,\varphi)\, .\, Z_{\Delta\ capteurs} \qquad \text{(produit scalaire)}$$

$$Z_\Delta \overset{def}{=} C_{1,n}(\psi,\theta,\varphi).\, Z_{\Delta 1} + C_{2,n}(\psi,\theta,\varphi).\, Z_{\Delta 2} + \ldots + C_{M,n}(\psi,\theta,\varphi).\, Z_{\Delta M}$$

Les coefficients de pondération complexes s'écrivent alors :

$$C_n(\psi,\theta,\varphi) \overset{def}{=} \begin{bmatrix} C_{1,n}(\psi,\theta,\varphi) \\ C_{2,n}(\psi,\theta,\varphi) \\ C_{3,n}(\psi,\theta,\varphi) \\ \vdots \\ C_{M,n}(\psi,\theta,\varphi) \end{bmatrix}_{M\,x\,1}$$

$$C_{m,n}(\psi,\theta,\varphi) \overset{def}{=} A_{capteur\ m}(\sigma_n,\gamma_n).\exp i(\,\delta_{m,n}(\psi,\theta,\varphi) + B_{capteur\ m}(\sigma_n,\gamma_n)\,)$$

$A_{capteur\ m}(\sigma_n,\gamma_n)$ représentant l'amplitude relative due au capteur m dans la direction du satellite n calculée à partir de la connaissance à priori des diagrammes d'antenne, y compris les atténuations dues aux voies RF analogiques.

$B_{capteur\ m}(\sigma_n,\gamma_n)$ représentant le déphasage dû au capteur m dans la direction du satellite n calculé à partir de la connaissance à priori des diagrammes d'antenne, y compris les déphasages dus aux voies RF analogiques.

Il est possible d'identifier les biais des capteurs en usine. Mais cela augmente le coût de production de l'équipement (moyens de calibration et temps passé) et ne permet pas de compenser le vieillissement du capteur.

Il est aussi possible d'identifier les déphasages des capteurs grâce aux signaux des satellites par un traitement spécifique (cf document FR 2972809)

Les boucles de poursuite (code et porteuse) sont réalisées de manière logicielle car elles fonctionnent à basse fréquence (typiquement de l'ordre Fw = 50 Hz), elles utilisent des fonctions mathématiques plus complexes, et présentent différents modes (recherche, transition, poursuite, poursuite dégradées, ...)

On utilise un discriminateur de phase :

$$D_\varphi(k) = argument(Z_P)$$

$$D_\varphi(k) = arc\ tangente(I_P, Q_P) \qquad Z_P = I_P + j.Q_P$$

I représentant la partie réelle, et Q représentant la partie imaginaire

$$D_\varphi(k) = \theta \qquad Z_P = \rho e^{i\theta}$$

$\rho$ représentant le module, et $\theta$ représentant l'argument

K représentant l'indice de la période de recalage (typiquement des périodes de 20 ms pour Fw = 50 Hz)

On utilise également un discriminateur de code :

$$D_{code}(k) = \text{partie réelle}( Z_\Delta . Z_{P*} ) \qquad Z_{P*} = \text{conjugué}( Z_{P*} ) = I_P - j.Q_P$$

$$D_{code}(k) = I_P . I_\Delta + j.( I_P . I_\Delta )$$

On utilise un correcteur de boucle de phase (PLL pour "Phase Lock Loop" en langue anglaise) :

$$A_{porteuse}(k) = A_{porteuse}(k-1) + T.K_{porteuse\,3}. D\varphi(k) . \lambda_{porteuse}/(2\pi) \quad (\text{en m/s}^2)$$

$$V_{porteuse}(k) = V_{porteuse}(k-1) + TA_{porteuse}(k) + T.K_{porteuse\,2}. D\varphi(k) . \lambda_{porteuse}/(2\pi) \qquad (\text{en m/s})$$

$$C_{porteuse}(k) = V_{porteuse}(k) + K_{porteuse\,1}. D\varphi(k) . \lambda_{porteuse}/(2\pi) \qquad (\text{en m/s})$$

On utilise un correcteur de boucle de code (DLL pour "Delay Lock Loop" en langue anglaise) :

$$V_{code}(k) = V_{code}(k-1) + TA_{code}(k) + T.K_{code\,2}. D_{code}(k) . L_{chip} \qquad (\text{en m/s})$$

$$C_{code}(k) = V_{code}(k) + K_{code\,1}. D_{code}(k) . L_{chip} \qquad (\text{en m/s})$$

Concernant les oscillateurs à commande numérique ou NCO pour " numerically controlled oscillators" en langue anglaise :

$$C_{NCO\,porteuse}(k) = C_{porteuse}(k) / \lambda_{porteuse} \qquad (\text{en Hz})$$

$$C_{NCO\,code}(k) = ( C_{porteuse}(k) + C_{code}(k) ) / L_{chip} \qquad (\text{en Hz})$$

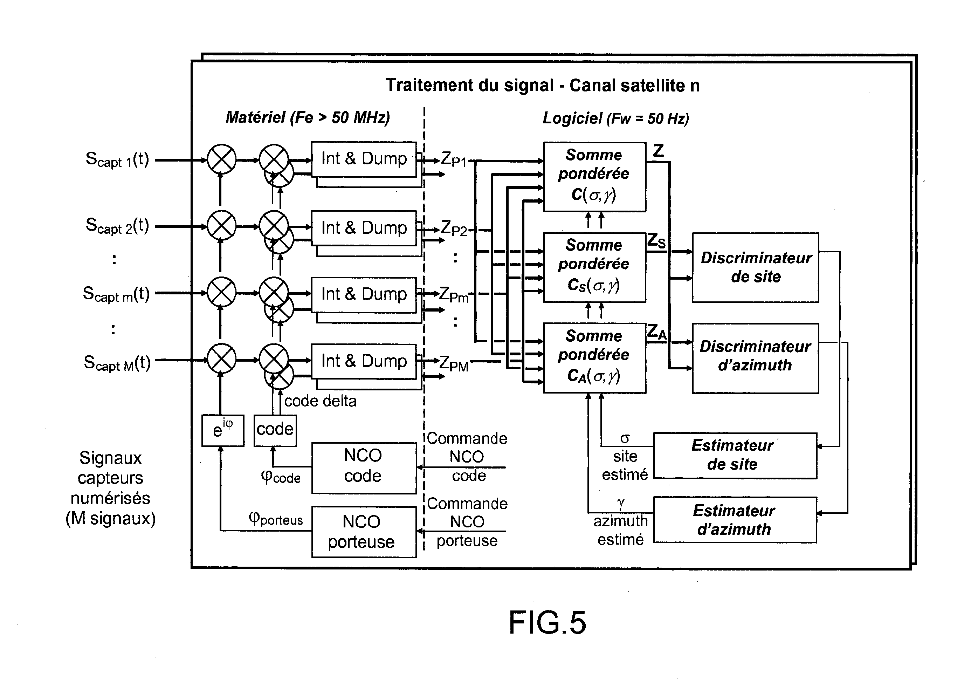

On détermine alors, dans l'étape 4, les deuxièmes angles de site et d'azimut comme suit. Il s'agit de déterminer les directions d'arrivée des signaux poursuivis.
On cherche, satellite par satellite, les deuxièmes angles de site et d'azimut (angles d'arrivée dans le deuxième repère antenne ou capteurs) qui maximisent la puissance après la somme pondérée.
Ce traitement est effectué de manière logicielle, en même temps que les boucles de poursuite, comme illustré sur la figure 5.
Les coefficients de pondération complexes à optimiser s'écrivent selon le critère qui suit :

$$C(\sigma,\gamma) \overset{def}{=} \begin{bmatrix} C_1(\sigma,\gamma) \\ C_2(\sigma,\gamma) \\ C_3(\sigma,\gamma) \\ \vdots \\ C_M(\sigma,\gamma) \end{bmatrix}_{M\,x\,1}$$

$$C_m(\sigma,\gamma) \overset{def}{=} \exp i( \delta_m(\sigma,\gamma) + B_{capteur\,m}(\sigma,\gamma) )$$

On cherche les valeurs des angles de site $\alpha$ et d'azimut $\gamma$ qui maximisent le critère $C(\sigma,\gamma)$ :

$$\Psi(\sigma,\gamma) \overset{def}{=} \parallel Z(\sigma,\gamma) \parallel 2$$

$$\Psi(\sigma,\gamma) \overset{def}{\underset{def}{=}} \parallel CT(\sigma,\gamma) . Z_{P\,capteurs} \parallel 2$$

$$\Psi(\sigma,\gamma) = [\, CT(\sigma,\gamma) . Z_{P\,capteurs}\,] . [\, CT(\sigma,\gamma) . ZP\,capteurs \,]^*$$

Cette maximisation peut être faite de plusieurs manières différentes.

Il est possible de faire cette maximisation par une recherche de maximum dans l'ensemble des valeurs possibles de $\sigma$ et $\alpha$ comprises respectivement dans $[0,\pi]$ et $[0,2\pi]$, avec un pas d'échantillonnage suffisamment fin pour la précision demandée.

Il est également possible d'effectuer une recherche de maximum par la méthode itérative du gradient, en s'approchant du maximum à chaque itération.

$$\begin{bmatrix} \sigma_{i+1} \\ \gamma_{i+1} \end{bmatrix} = \begin{bmatrix} \sigma_i \\ \gamma_i \end{bmatrix} + \mu_i . \bar{Grad}\Psi(\sigma_i,\gamma_i)$$

$$\bar{Grad}\Psi(\sigma,\gamma) \overset{def}{=} \begin{bmatrix} \dfrac{\partial \Psi}{\partial \sigma}(\sigma,\gamma) \\ \dfrac{\partial \Psi}{\partial \gamma}(\sigma,\gamma) \end{bmatrix}$$

i représente l'indice de l'itération

$$\bar{Grad}\Psi(\sigma,\gamma) = \begin{bmatrix} \mathrm{Re}\left( [\dfrac{\partial C^T}{\partial \sigma}(\sigma,\gamma).Z_{P\,capteurs}].[C^T(\sigma,\gamma).Z_{P\,capteurs}]^* \right) \\ \mathrm{Re}\left( [\dfrac{\partial C^T}{\partial \gamma}(\sigma,\gamma).Z_{P\,capteurs}].[(C^T(\sigma,\gamma).Z_{P\,capteurs}]^* \right) \end{bmatrix}$$

$$\bar{Grad}\Psi(\sigma,\gamma) = \begin{bmatrix} \mathrm{Re}( & Z_S(\sigma,\gamma) & . & Z(\sigma,\gamma)^* & ) \\ \mathrm{Re}( & Z_A(\sigma,\gamma) & . & Z(\sigma,\gamma)^* & ) \end{bmatrix}$$

Avec :

$$Z(\sigma,\gamma) \overset{def}{=} C^T(\sigma,\gamma).Z_{P\,capteurs}$$

$$Z_S(\sigma,\gamma) \overset{def}{=} \dfrac{\partial C^T}{\partial \sigma}(\sigma,\gamma).Z_{P\,capteurs}$$

$$Z_A(\sigma,\gamma) \overset{def}{=} \dfrac{\partial C^T}{\partial \gamma}(\sigma,\gamma).Z_{P\,capteurs}$$

Notation : Re(z) représente la partie réelle de z

On construit des discriminateurs pour estimer l'erreur de site et d'azimut et converger plus rapidement vers les valeurs vraies $(\sigma_0, \gamma_0)$ donnant le maximum de puissance après pondération.

On utilise des discriminateurs de site et d'azimut :

$$D_S(\sigma, \gamma) \overset{def}{=} Re[\, Z_S(\sigma, \gamma).Z(\sigma, \gamma)^* \,] / \| Z \|^2 / \rho_S \;\; = Re(\, Z_S / Z^* \,) / \rho_S$$

$$D_A(\sigma, \gamma) \overset{def}{=} Re[\, Z_A(\sigma, \gamma) . Z(\sigma, \gamma)^* \,] / \| Z \|^2 / \rho_A \;\; = Re(\, Z_A / Z^* \,) / \rho_A$$

On utilise la somme pondérée "ponctuelle" :

$$Z(\sigma, \gamma) \overset{def}{=} C^T(\sigma, \gamma).Z_{P\,capteurs}$$

Et les sommes pondérées avec des pondérations complexes "delta" :

$$Z_S(\sigma, \gamma) \overset{def}{=} C_S^{\;T}(\sigma, \gamma).Z_{P\,capteurs} \qquad C_S^{\;T}(\sigma, \gamma) \overset{def}{=} \frac{\partial C^T}{\partial \sigma}(\sigma, \gamma)$$

$$Z_A(\sigma, \gamma) \overset{def}{=} C_A^{\;T}(\sigma, \gamma).Z_{P\,capteurs} \qquad C_A^{\;T}(\sigma, \gamma) \overset{def}{=} \frac{\partial C^T}{\partial \gamma}(\sigma, \gamma)$$

Pour calculer la sensibilité des discriminateurs, on pose :

$$\Pi(\sigma, \gamma) \overset{def}{=} C^T(\sigma, \gamma).C(\sigma_0, \gamma_0)$$

$$\Delta_S(\sigma, \gamma) \overset{def}{=} \frac{\partial C^T}{\partial \sigma}(\sigma, \gamma).C(\sigma_0, \gamma_0) = \frac{\partial}{\partial \sigma}(\,\Pi\,)(\alpha, \beta)$$

$$\Delta_A(\sigma, \gamma) \overset{def}{=} \frac{\partial C^T}{\partial \sigma}(\sigma, \gamma).C(\sigma_0, \gamma_0) = \frac{\partial}{\partial \gamma}(\,\Pi\,)(\alpha, \beta)$$

Le signal reçu s'exprime:

$$Z_{P\,capteurs} = C(\sigma_{vrai}, \gamma_{vrai}).T.\sqrt{P} + \text{bruit}$$

P représentant la puissance du signal reçue, et
T représentant le temps d'intégration cohérente

Le vecteur $C(\sigma_{vrai}, \gamma_{vrai})$ est représentatif des amplitudes complexes reçues sur chaque capteur. Les angles $(\sigma_{vrai}, \gamma_{vrai})$ correspondent à la direction vraie donc au maximum de $\psi(\sigma, \gamma)$. D'où :

$$Z(\sigma, \gamma) = C^T(\sigma, \gamma).C(\sigma_{vrai}, \gamma_{vrai}).T.\sqrt{P}$$

$$Z_S(\sigma,\gamma) = \frac{\partial C^T}{\partial \sigma}(\sigma,\gamma).C(\sigma_{vrai},\gamma_{vrai}).T.\sqrt{P}$$

$$Z_A(\sigma,\gamma) = \frac{\partial C^T}{\partial \gamma}(\sigma,\gamma).C(\sigma_{vrai},\gamma_{vrai}).T.\sqrt{P}$$

Dans l'hypothèse où on connaît $(\sigma_{vrai},\gamma_{vrai})$, en posant $(\sigma_0, \gamma_0) = (\sigma_{vrai}, \gamma_{vrai})$ on a :

$$Z(\sigma,\gamma) = \Pi(\sigma,\gamma).T.\sqrt{P}$$

$$Z_S(\sigma,\gamma) = \Delta_S(\sigma,\gamma).T.\sqrt{P}$$

$$Z_A(\sigma,\gamma) = \Delta_A(\sigma,\gamma).T.\sqrt{P}$$

D'où:

$$D_S(\sigma,\gamma) = Re[\ \Delta_S.\Pi\ ]\ /\ \|\ \Pi\ \|^2\ /\ \rho_S$$

$$D_A(\sigma,\gamma) = Re[\ \Delta_A.\Pi\ ]\ /\ \|\ \Pi\ \|^2\ /\ \rho_a$$

Pour normaliser la sensibilité des discriminateurs à 1 on pose :

$$\rho_S \overset{def}{=} \frac{\partial}{\partial \sigma}(\ Re[\ \Delta_S.\Pi\ ]\ /\ \|\ \Pi\ \|^2\ )\ (\sigma_0,\gamma_0)$$

$$\rho_A \overset{def}{=} \frac{\partial}{\partial \gamma}(\ Re[\ \Delta_A.\Pi\ ]\ /\ \|\ \Pi\ \|^2\ )\ (\sigma_0,\gamma_0)$$

Ainsi :

$$D_S(\sigma,\gamma) \cong (\sigma - \sigma_{vrai}) + bruit$$
$$D_A(\sigma,\gamma) \cong (\gamma - \gamma_{vrai}) + bruit$$

Les discriminateurs permettent bien d'estimer les erreurs de site et d'azimut.
Pour calculer ces pondérations "delta" on peut utiliser la méthode des différences finies :

$$C_S(\sigma,\gamma) \overset{def}{=} \frac{\partial C}{\partial \sigma}(\sigma,\gamma) \cong \frac{C(\sigma+d\sigma,\gamma) - C(\sigma,\gamma)}{d\sigma}$$

$$C_A(\sigma,\gamma) \overset{def}{=} \frac{\partial C}{\partial \gamma}(\sigma,\gamma) \cong \frac{C(\sigma,\alpha+d\gamma) - C(\sigma,\gamma)}{d\gamma}$$

Pour $d\sigma$ et $d\alpha$ petits, le résultat est très proche de la dérivée. Cette méthode qui évite de recoder un calcul de dérivée dans le récepteur.
Comme on ne connaît pas les vraies valeurs $(\sigma_{vrai},\gamma_{vrai})$ de $(\sigma,y)$ on prend à la place les valeurs estimée à

l'étape précédente $(\sigma_i, \gamma_i)$

La méthode du gradient converge vers un maximum local qui est le maximum absolu si les valeurs initiales $\sigma_0$ et $\gamma_0$ en sont proches. Pour cela on peut commencer par une recherche globale avec un pas d'échantillonnage grossier, par exemple un pas de l'ordre de 30°.

Du choix du gain de recalage $\mu_i$ dépend la vitesse de convergence. On peut prendre par exemple un gain constant égal à 1.

Le critère de convergence peut être la norme de l'incrément $\mu_i \cdot \vec{Grad}\Phi(\sigma_i, \gamma_i)$

Une fois que l'algorithme, appliqué au même vecteur $Z_{P\ capteur}(k)$ de la période k, a convergé, on peut utiliser les valeurs de $\sigma$ et $\gamma$ ainsi obtenue pour réinitialiser la recherche à l'étape k+1 suivante. Si l'antenne est sur un porteur avec une dynamique d'attitude normale les nouvelles valeurs de site et d'azimut ne doivent pas être trop éloignées des précédentes, ce qui autorise une itération par période k :

$$\begin{bmatrix} \sigma_{k+1} \\ \gamma_{k+1} \end{bmatrix} = \begin{bmatrix} \sigma_k \\ \gamma_k \end{bmatrix} + \begin{bmatrix} \mu_{S\,k}.D_S(\sigma_k, \gamma_k) \\ \mu_{A\,k}D_A(\sigma_k, \gamma_k) \end{bmatrix}$$

On peut prendre par exemple comme valeurs de gain de recalage $\mu_s = \mu_A = 1 / \tau/\tau$ : constante de temps).

On peut aussi utiliser un filtre de Kalman pour optimiser les gains de recalage $\mu_s$ et $\mu_A$

Il est possible de faire la même recherche en utilisant comme paramètres les cosinus directeurs $\alpha$ et $\beta$.

**On contrôle la cohérence sur les directions des satellites.**

Une fois que le récepteur a déterminé les directions d'arrivée des signaux des satellite en deuxième repère antenne, représentés par les angles de site et d'azimut pour chaque satellite, il peut vérifier si ces directions son cohérentes des angles d'attitude de l'antenne déterminés par ailleurs.

On peut utiliser, à ces fins, comme critère la somme des carrés des écarts entre les angles de site $\sigma_n$ et d'azimut $\gamma_n$ déterminés sur le signal démodulé en sortie des corrélateurs et ceux calculés à partir des angles d'attitude et de la direction des satellites. Néanmoins du fait de discontinuités sur les angles, on préfère effectuer la comparaison directement sur les vecteurs directeurs :

$$\Phi \stackrel{def}{=} \sum_{n=1,..,N} \left\| \sigma_n(\psi, \theta, \varphi) - \sigma_{k,n} \right\|^2 + \left\| \gamma_n(\psi, \theta, \varphi) - \gamma_{k,n} \right\|$$

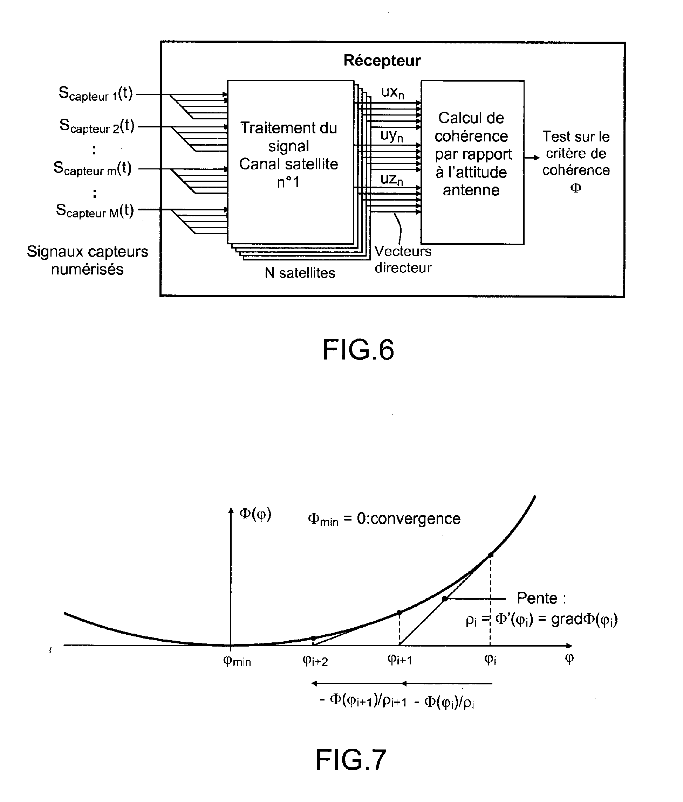

Cela est illustré sur la figure 6.

Si le critère dépasse un seuil prédéterminé alors on détecte un leurrage et le récepteur informe l'utilisateur du risque encouru, au moyen d'une alarme, par exemple visuelle ou sonore.

Le récepteur peut aussi décider de relancer une acquisition en espérant retrouver le signal non leurré, jusqu'à obtention de mesures cohérentes.

Ensuite, dans les étapes 4 et 5, on fait un contrôle de cohérence, comme illustré sur la figure 7. Une fois que le récepteur a déterminé, dans l'étape 4, les directions d'arrivée des signaux satellite en repère capteur, représentés par les angles de site et d'azimut pour chaque satellite, il peut vérifier si ces directions son cohérentes des angles d'attitude de l'antenne déterminé par ailleurs dans l'étape 3.

On peut utiliser pour cela, une fonction de vraisemblance entre les premiers et deuxièmes angles de site et d'azimut, dans l'étape 5.

Par exemple, comme critère, on peut prendre la somme des carré des écarts entre les angles de site $\sigma_n$ et d'azimut $\alpha_n$ déterminés sur le signal démodulé en sortie des corrélateurs et ceux calculés à partir des angles d'attitude et de la direction des satellites. Néanmoins du fait de discontinuité sur les angles, on peut effectuer la comparaison directement sur les vecteurs directeurs :

$$\Phi \stackrel{def}{=} \sum_{n=1,..,N} \left\| \vec{u}_{n\ capteurs}(\psi, \theta, \varphi) - \vec{u}_{capteurs}(\sigma_{k,n}, \gamma_{k,n}) \right\|^2$$

Si le critère dépasse un seuil prédéterminé, alors on détecte un leurrage et le récepteur informe l'utilisateur du risque encouru, au moye d'une alarme, par exemple visuelle ou sonore.

Le récepteur peut aussi décider de relancer une acquisition en espérant retrouver le signal non leurré, jusqu'à obtention de mesures cohérentes.

Concernant l'étape 2 de détermination de l'attitude de l'antenne dans le premier repère TGL, celle-ci peut être fournie par une centrale inertielle ou référence d'attitude.

Lorsque le récepteur ne dispose pas d'une référence d'attitude, il est possible de déterminer les angles d'attitude à partir des directions satellites en repère capteur déterminés à partir des signaux reçus, dans l'étape 4. Dans ce cas, en situation de leurrage, le critère de cohérence sera diminué par rapport au cas où on dispose d'une référence externe, mais du fait de la multiplicité des satellites on détectera encore l'incohérence.

Dans l'étape 4, on détermine l'attitude de l'antenne comme suit.

La relation entre les angles d'Euler $(\psi,\theta,\varphi)$ et les directions d'arrivée n'est pas linéaire. On ne peut pas utiliser un algorithme de résolution directe, par exemple la méthode des moindres carrés.

Il est possible d'effectuer une recherche dans le domaine des angles d'Euler : pour chaque hypothèse $(\psi,\theta,\varphi)$ considérée, on calcule les directions supposées d'arrivée des signaux en deuxième repère ou repère capteur, puis le critère ce cohérence. On retient les valeurs des angles donnant le critère minimal.

$$\Phi(\psi,\theta,\varphi) \overset{def}{=} \sum_{n=1,..,N} \left\| \vec{u}_{n\ capteurs}(\psi,\theta,\varphi) - \vec{u}_{capteurs}(\sigma_{k,n},\gamma_{k,n}) \right\|^2$$

Néanmoins, une recherche complète du domaine dans lequel les angles d'Euler prennent leurs valeurs serait très longue et coûteuse en calcul :

  Le cap $\psi$ prend ses valeurs dans $[0,2\pi]$ ou $[0°,360°]$
  L'assiette $\theta$ prend ses valeurs dans $[-\pi,\pi]$ ou $[-180°,180°]$
  L'inclinaison $\varphi$ prend ses valeurs dans $[-\pi,\pi]$ ou $[-180°,180°]$
  Si on échantillonne de 10 degrés en 10° cela fait 36 x 36 x 36 = 46656 hypothèses à traiter.

On préfère faire une recherche itérative en se dirigeant vers le minimum à chaque itération.

On peut utilise la méthode de Newton dans un espace à plusieurs dimensions :

$$\begin{bmatrix} \psi_{i+1} \\ \theta_{i+1} \\ \varphi_{i+1} \end{bmatrix} = \begin{bmatrix} \psi_i \\ \theta_i \\ \varphi_i \end{bmatrix} - \Phi(\psi_i,\theta_i,\varphi_i) . \frac{\vec{Grad}\Phi(\psi_i,\theta_i,\varphi_i)}{\left\| \vec{Grad}\Phi(\psi_i,\theta_i,\varphi_i) \right\|^2}$$

avec :

$$\vec{Grad}\Phi(\psi,\theta,\varphi) \overset{def}{=} \begin{bmatrix} \dfrac{\partial \Phi}{\partial \psi}(\psi,\theta,\varphi) \\ \dfrac{\partial \Phi}{\partial \theta}(\psi,\theta,\varphi) \\ \dfrac{\partial \Phi}{\partial \varphi}(\psi,\theta,\varphi) \end{bmatrix}$$

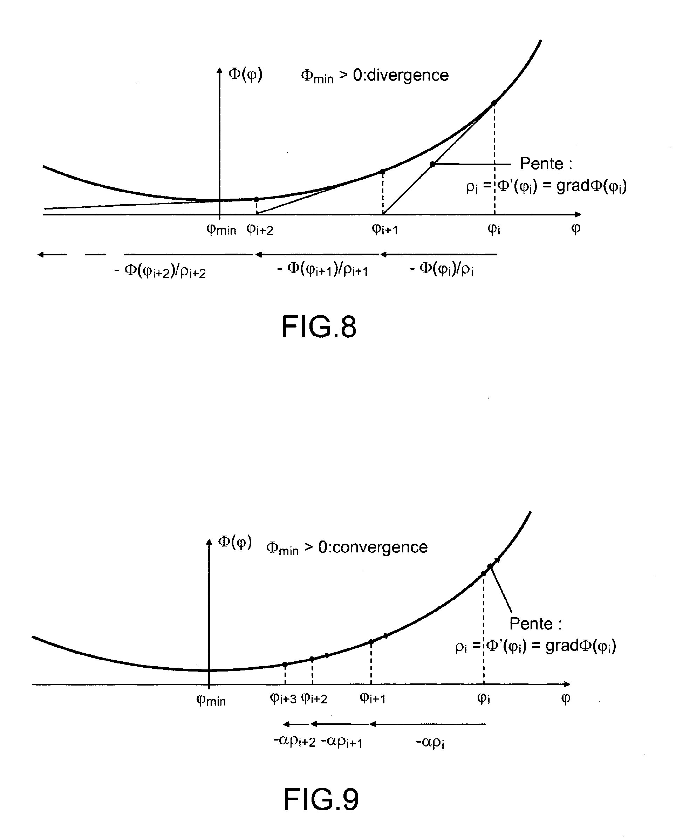

Lorsque le minimum du critère de vraisemblance est nul, la méthode converge très rapidement vers ce minimum, comme illustré sur la figure 8. C'est le cas idéal dans lequel il existe une solution exacte (résidu nuls), c'est à dire le cas dans lequel les $d_{m,n\ mesuré}$ sont sans bruit de mesure et où les biais d'antennes $\beta_{0\ capteur}$ m sont parfaitement tabulés. Dans la réalité, il est peu probable que la somme des carrés des résidus soit nulle. Il faut donc s'attendre à ce que la méthode ne converge plus difficilement, comme illustré sur la figure 9.

Pour éviter la divergence, on peut avantageusement utiliser une méthode moins rapide mais plus robuste :

$$\begin{bmatrix} \psi_{i+1} \\ \theta_{i+1} \\ \varphi_{i+1} \end{bmatrix} = \begin{bmatrix} \psi_i \\ \theta_i \\ \varphi_i \end{bmatrix} - \alpha \, . \, \vec{Grad}\Phi(\psi_i,\theta_i,\varphi_i)$$

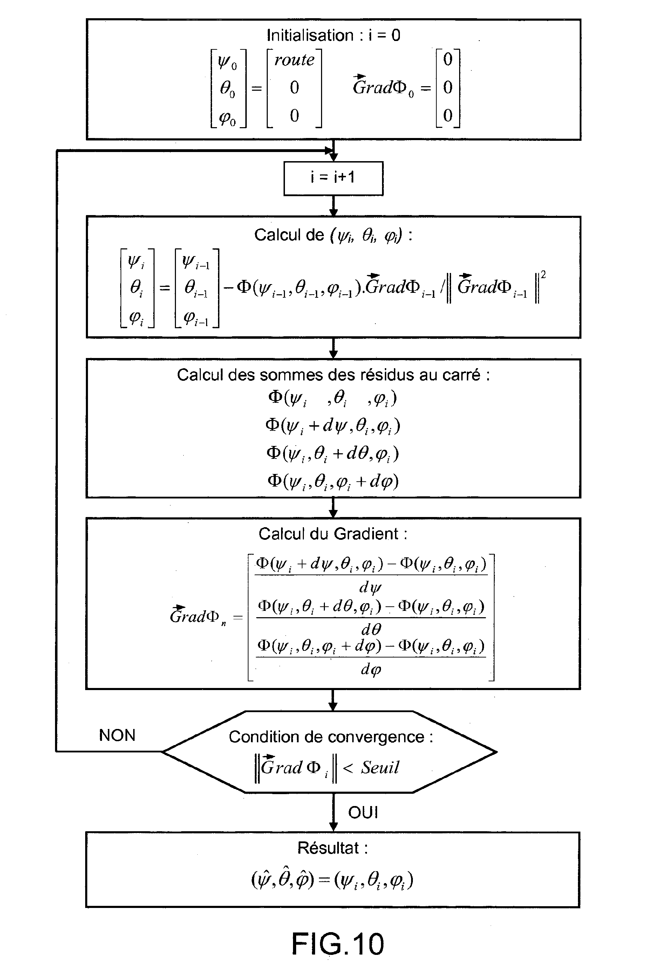

comme illustré sur la figure 10.

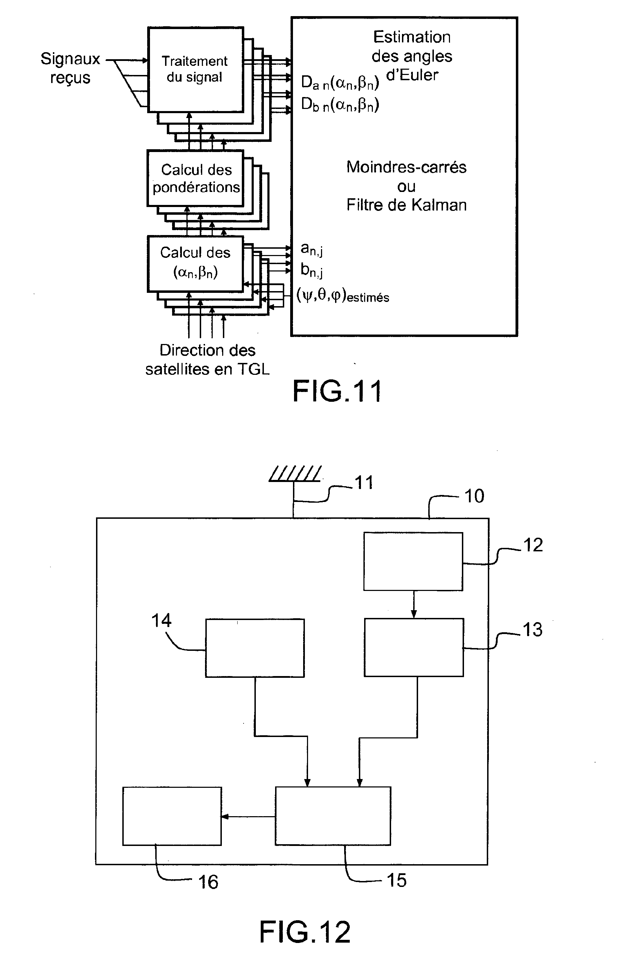

Pour calculer le gradient on peut utiliser la méthode des différences finies comme illustré sur la figure 11 en utilisant :

$$\vec{Grad}\Phi(\psi,\theta,\varphi) \overset{def}{=} \lim_{d \to 0} \begin{bmatrix} \dfrac{\Phi(\psi+d\psi,\theta,\varphi)-\Phi(\psi,\theta,\varphi)}{d\psi} \\ \dfrac{\Phi(\psi,\theta+d\theta,\varphi)-\Phi(\psi,\theta,\varphi)}{d\theta} \\ \dfrac{\Phi(\psi,\theta,\varphi+d\varphi)-\Phi(\psi,\theta,\varphi)}{d\varphi} \end{bmatrix}$$

$$\vec{Grad}\Phi(\psi,\theta,\varphi) \cong \begin{bmatrix} \dfrac{\Phi(\psi+d\psi,\theta,\varphi)-\Phi(\psi,\theta,\varphi)}{d\psi} \\ \dfrac{\Phi(\psi,\theta+d\theta,\varphi)-\Phi(\psi,\theta,\varphi)}{d\theta} \\ \dfrac{\Phi(\psi,\theta,\varphi+d\varphi)-\Phi(\psi,\theta,\varphi)}{d\varphi} \end{bmatrix} \quad \text{pour } d\psi, \, d\theta \text{ et } d\varphi \text{ petits}$$

En variante, l'étape 2 de détermination de l'attitude de l'antenne dans le premier repère ou repère antenne ou capteurs.

Au lieu de déterminer les angles d'attitude de l'antenne à partir des directions d'arrivée estimées des signaux en repère capteur de l'étape 4, qui peuvent être fausses en cas de leurrage, on peut préférer chercher les angles d'attitude donnant le maximum d'énergie après les sommes pondérées en sortie des corrélateurs. On cherche alors à maximiser la somme des énergies sur tous les signaux satellites démodulés :

$$\Psi(\varphi,\theta,\psi) \overset{def}{=} \Sigma n=1,..,N \, \| \, Z_{P\,n}\,(\varphi,\theta,\psi) \, \|2$$

$$\Psi(\varphi,\theta,\psi) \overset{def}{=} \Sigma n=1,..,N \, \| \, C_n^T(\varphi,\theta,\psi) \, . \, Z_{P\,\text{capteurs}\,n} \, \|2$$

$$\Psi(\varphi,\theta,\psi) \overset{def}{=} \Sigma n=1,..,N \, [ \, C_n^T(\varphi,\theta,\psi) \, . \, Z_{P\,\text{capteurs}\,n} \, ].[ \, C^T(\sigma,\gamma) \, . \, Z_{P\,\text{capteurs}\,n} \, ]^*$$

On peut utiliser la méthode du gradient :

$$\vec{Grad}\Psi(\psi,\theta,\varphi) = \sum_{n=1,..,N} \begin{bmatrix} \mathrm{Re}([\frac{\partial C_n^T}{\partial \psi}(\psi,\theta,\varphi).Z_{P\,capteurs\,n}].[C_n^T(\psi,\theta,\varphi).Z_{P\,capteurs\,n}]^*) \\ \mathrm{Re}([\frac{\partial C_n^T}{\partial \theta}(\psi,\theta,\varphi).Z_{P\,capteurs\,n}].[C_n^T(\psi,\theta,\varphi).Z_{P\,capteurs\,n}]^*) \\ \mathrm{Re}([\frac{\partial C_n^T}{\partial \varphi}(\psi,\theta,\varphi).Z_{P\,capteurs\,n}].[C_n^T(\psi,\theta,\varphi).Z_{P\,capteurs\,n}]^*) \end{bmatrix}$$

$$C_n(\psi,\theta,\varphi) = \begin{bmatrix} C_{1,n}(\psi,\theta,\varphi) \\ C_{2,n}(\psi,\theta,\varphi) \\ C_{3,n}(\psi,\theta,\varphi) \\ \vdots \\ C_{M,n}(\psi,\theta,\varphi) \end{bmatrix}_{M\times 1}$$

$$C_{m,n}(\psi,\theta,\varphi) = \exp i(\ \delta_{m,n}(\psi,\theta,\varphi) + \hat{\beta}_{capteur\,m}(\sigma_n(\psi,\theta,\varphi),\gamma_n(\psi,\theta,\varphi))\ )$$

$$\delta_{m,n}(\psi,\theta,\varphi) = \vec{u}_{n\,capteurs}(\psi,\theta,\varphi)\,.\,\vec{r}_{m\,capteurs}\,.\,(2\pi/\lambda) \qquad \text{(en rad)}$$

$$\vec{u}_{n\,capteurs}(\psi,\theta,\varphi) = \begin{bmatrix} \cos(\gamma_n).\cos(\sigma_n) \\ \sin(\gamma_n).\cos(\sigma_n) \\ \sin(\sigma_n) \end{bmatrix} = \begin{bmatrix} ux_n(\psi,\theta,\varphi) \\ uy_n(\psi,\theta,\varphi) \\ uz_n(\psi,\theta,\varphi) \end{bmatrix}$$

L'angle de site en repère capteur s'écrit alors:

$$\sigma_n(\psi,\theta,\varphi) = \sin^{-1}(\ uz_n(\psi,\theta,\varphi)\ )$$

L'angle d'azimut en repère capteur s'écrit alors :

$$\gamma_n(\psi,\theta,\varphi) = \tan^{-1}(\ ux_n(\psi,\theta,\varphi)\ ,\ uy_n(\psi,\theta,\varphi)\ )$$

Il faut alors appliquer trois pondérations "delta" par satellite ce qui est coûteux en nombre de calculs.

On peut alors utiliser des discriminateurs.

On prend comme paramètres de directions des satellites les cosinus directeurs $(\alpha,\beta)$ en repère capteurs ou deuxième repère. On calcule des discriminateurs en sortie des corrélateurs pour mesurer les erreurs commise sur les directions des satellites.

$$D_{a\,n}(\alpha,\beta) \stackrel{def}{=} \mathrm{Re}[\,Z_{a\,n}(\alpha,\beta)\,.\,Z_n(\alpha,\beta)^*\,]\,/\,\|Z\|^2\,/\,\rho_a\ =\ \mathrm{Re}(\,Z_a\,/\,Z^*\,)\,/\,\rho_a$$

$$D_{b\,n}(\alpha,\beta) \stackrel{def}{=} \mathrm{Re}[\,Z_{b\,n}(\alpha,\beta)\,.\,Z_n(\alpha,\beta)^*\,]\,/\,\|Z\|^2\,/\,\rho_b\ =\ \mathrm{Re}(\,Z_b\,/\,Z^*\,)\,/\,\rho_b$$

Les calculs sont effectués avec les mêmes formules que celles utilisées avec les angles de site et d'azimut $(\sigma,\gamma)$

Somme pondérée ponctuelle :

$$Z_{P\,n}(\alpha,\beta) \stackrel{def}{=} C^T(\alpha,\beta).Z_{P\,n\ capteurs}$$

Sommes pondérées avec les pondérations complexes "delta" :

$$Z_{a\,n}(\alpha,\beta) \stackrel{def}{=} C_a^{\ T}(\alpha,\beta).Z_{P\,n\ capteurs} \qquad C_a(\alpha,\beta) \stackrel{def}{=} \frac{\partial C^T}{\partial \alpha}(\alpha,\beta)$$

$$Z_{b\,n}(\alpha,\beta) \stackrel{def}{=} C_b^{\ T}(\alpha,\beta).Z_{P\,n\ capteurs} \qquad C_b(\alpha,\beta) \stackrel{def}{=} \frac{\partial C^T}{\partial \beta}(\alpha,\beta)$$

$$C(\alpha,\beta) = \begin{bmatrix} C_1(\alpha,\beta) \\ C_2(\alpha,\beta) \\ C_3(\alpha,\beta) \\ \vdots \\ C_M(\alpha,\beta) \end{bmatrix}_{M\,x\,1}$$

$$C_m(\alpha,\beta) = \exp i(\ \delta_m(\alpha,\beta) + B_{capteur\,m}(\ \sigma(\alpha,\beta),\gamma(\alpha,\beta)\ )$$

$$\delta_m(\alpha,\beta) = \vec{u}_{capteurs}(\alpha,\beta) . \vec{r}_{m\ capteurs} . (2\pi/\lambda)$$

$$\vec{u}_{capteurs}(\alpha,\beta) = \begin{bmatrix} \alpha \\ \beta \\ \sqrt{1-\alpha^2-\beta^2} \end{bmatrix} = \begin{bmatrix} ux(\alpha,\beta) \\ uy(\alpha,\beta) \\ uz(\alpha,\beta) \end{bmatrix}$$

$$\sigma(\alpha,\beta) = \tan^{-1}(\sqrt{\alpha^2+\beta^2}\ ,\ \sqrt{1-\alpha^2+\beta^2}\ )$$

$$\gamma(\alpha,\beta) = \tan^{-1}(\ \alpha\ ,\ \beta\ )$$

Les pentes $\rho_a$ et $\rho_b$ sont calculées de la manière suivante :

$$\Pi(\alpha,\beta) \stackrel{def}{=} C^T(\alpha,\beta).C(\alpha_0,\beta_0)$$

$$\Delta_a(\alpha,\beta) \stackrel{def}{=} \frac{\partial C^T}{\partial \alpha}(\alpha,\beta).C(\alpha_0,\beta_0) = \frac{\partial}{\partial \alpha}(\ \Pi\ )(\alpha,\beta)$$

$$\Delta_b(\alpha,\beta) \stackrel{def}{=} \frac{\partial C^T}{\partial \sigma}(\alpha,\beta).C(\alpha_0,\beta_0) = \frac{\partial}{\partial \beta}(\ \Pi\ )(\alpha,\beta)$$

$$\rho_S \stackrel{def}{=} \frac{\partial}{\partial \alpha}(\ Re[\ \Delta_a.\Pi\ ]\ )\ (\alpha_0,\beta_0)\ /\ \|\ \Pi(\alpha_0,\beta_0)\ \|^2$$

$$\rho_A \stackrel{def}{=} \frac{\partial}{\partial \beta}(\ Re[\ \Delta_b.\Pi\ ]\ )\ (\alpha_0,\beta_0)\ /\ \|\ \Pi(\alpha_0,\beta_0)\ \|^2$$

pour des valeurs $(\alpha_0, \beta_0)$ correspondant aux dernière estimées de $(\alpha,\beta)$

Si les valeurs de $(\alpha, \beta)$ sont proches des vraies valeurs $(\alpha_{vrai}, \beta_{vrai})$ :

$$D_{a\,n}(\alpha,\beta) \cong (\ \alpha - \alpha_{vrai\,n}\ ) + bruit$$

$$D_{b\,n}(\alpha,\beta) \cong (\ \beta - \beta_{vrai\,n}\ ) + bruit$$

On utilise également un modèle d'observation.
La relation entre les cosinus directeurs $(\alpha_n,\beta_n)$ et les angles d'Euler $(\psi,\theta,\varphi)$ n'est pas linéaire.

$$\vec{u}_{n\,capteurs}(\psi,\theta,\varphi) = \begin{bmatrix} ux_n(\psi,\theta,\varphi) \\ uy_n(\psi,\theta,\varphi) \\ uz_n(\psi,\theta,\varphi) \end{bmatrix} = \begin{bmatrix} \alpha_n(\psi,\theta,\varphi) \\ \beta_n(\psi,\theta,\varphi) \\ \sqrt{1-\alpha_n(\psi,\theta,\varphi)^2 - \beta_n(\psi,\theta,\varphi)^2} \end{bmatrix}$$

$$\vec{u}_{n\,capteurs}(\psi,\theta,\varphi) = M(\psi,\theta,\varphi)\,.\,\vec{u}_{n\,TGL}$$

$$M(\psi,\theta,\varphi) = \begin{bmatrix} 1 & 0 & 0 \\ 0 & \cos\varphi & -\sin\varphi \\ 0 & \sin\varphi & \cos\varphi \end{bmatrix}\begin{bmatrix} \cos\theta & 0 & -\sin\theta \\ 0 & 1 & 0 \\ \sin\theta & 0 & \cos\theta \end{bmatrix}\begin{bmatrix} \cos\psi & \sin\psi & 0 \\ -\sin\psi & \cos\psi & 0 \\ 0 & 0 & 1 \end{bmatrix}$$

On linéarise cette relation autour d'un point de fonctionnement $(\psi,\theta,\varphi)$ pour établir un modèle d'observation linéaire :

$$d\alpha_n \stackrel{def}{=} \alpha_n(\psi+d\psi,\theta+d\theta,\varphi+d\varphi) - \alpha_n(\psi,\theta,\varphi)$$

$$d\beta_n \stackrel{def}{=} \beta_n(\psi+d\psi,\theta+d\theta,\varphi+d\varphi) - \beta_n(\psi,\theta,\varphi)$$

$$d\alpha_n = \frac{\partial ux_n}{\partial \psi}(\psi,\theta,\varphi).d\psi + \frac{\partial ux_n}{\partial \theta}(\psi,\theta,\varphi).d\theta + \frac{\partial ux_n}{\partial \varphi}(\psi,\theta,\varphi).d\varphi$$

$$d\beta_n = \frac{\partial uy_n}{\partial \psi}(\psi,\theta,\varphi).d\psi + \frac{\partial uy_n}{\partial \theta}(\psi,\theta,\varphi).d\theta + \frac{\partial uy_n}{\partial \varphi}(\psi,\theta,\varphi).d\varphi$$

Pour le calcul des dérivées partielles on peut utiliser la méthode des différences finies :

$$\frac{\partial ux_n}{\partial \psi}(\psi,\theta,\varphi) = \left( \partial ux_n(\psi+d\psi,\theta,\varphi) - \partial ux_n(\psi,\theta,\varphi) \right)/d\psi$$

En utilisant d'autre notations :

$$d\alpha_n = a_{n,1} \, . \, d\psi + a_{n,2} \, . \, d\theta + a_{n,3} \, . \, d\varphi$$

$$d\beta_n = b_{n,1} \, . \, d\psi + b_{n,2} \, . \, d\theta + b_{n,3} \, . \, d\varphi$$

Si on considère tous les satellites visibles on a 2.N équations pour 3 inconnues.

$$\begin{bmatrix} d\alpha_1 \\ d\beta_1 \\ : \\ d\alpha_N \\ d\beta_N \end{bmatrix} = \begin{bmatrix} a_{1,1} & a_{1,2} & a_{1,3} \\ b_{1,2} & b_{1,2} & b_{1,3} \\ : & : & : \\ a_{N,1} & a_{N,2} & a_{N,3} \\ b_{N,1} & b_{N,2} & b_{N,3} \end{bmatrix} \begin{bmatrix} d\varphi \\ d\theta \\ d\psi \end{bmatrix}$$

soit :

$$\begin{bmatrix} d\alpha_1 \\ d\beta_1 \\ : \\ d\alpha_N \\ d\beta_N \end{bmatrix} = H \begin{bmatrix} d\varphi \\ d\theta \\ d\psi \end{bmatrix} \quad \text{avec } H = \begin{bmatrix} a_{1,1} & a_{1,2} & a_{1,3} \\ b_{1,2} & b_{1,2} & b_{1,3} \\ : & : & : \\ a_{N,1} & a_{N,2} & a_{N,3} \\ b_{N,1} & b_{N,2} & b_{N,3} \end{bmatrix}$$

On cherche à remonter au erreurs sur les angles d'Euler ($d\psi = \psi - \psi_{vrai}$, $d\theta = \theta - \theta_{vrai}$, $d\varphi = \varphi - \varphi_{vrai}$) à partir des erreurs sur les cosinus directeurs ( $d\alpha_n = \alpha_n(\psi,\theta,\varphi) - \alpha_{vrai\,n}$ , $d\beta_n = \beta_n(\psi,\theta,\varphi) - \beta_{vrai\,n}$)

Les erreurs sur les cosinus directeurs sont observables grâce aux discriminateurs :

$$d\alpha_n = \alpha_n(\psi,\theta,\varphi) - \alpha_{0\,n} = D_{a\,n}( \alpha_n(\psi,\theta,\varphi) , \beta_n(\psi,\theta,\varphi) ) + \text{bruit}$$

$$d\beta_n = \beta_n(\psi,\theta,\varphi) - \beta_{0\,n} = D_{b\,n}( \alpha_n(\psi,\theta,\varphi) , \beta_n(\psi,\theta,\varphi) ) + \text{bruit}$$

Aussi, on peut utiliser une résolution par les moindres carrés :

$$\begin{bmatrix} d\varphi_{estimé} \\ d\theta_{estimé} \\ d\psi_{estimé} \end{bmatrix} = H* \begin{bmatrix} d\alpha_1 \\ d\beta_1 \\ : \\ d\alpha_N \\ d\beta_N \end{bmatrix}$$

avec $H* = (H^T W^T W H)^{-1} H^T W^T$ pour pseudo inverse.

La matrice W permet de pondérer les mesures en fonction du rapport signal sur bruit estimé sur chaque signal satellite.

$$W = \begin{bmatrix} 1/\sigma_{a1}^2 & 0 & .. & .. & 0 \\ 0 & 1/\sigma_{b1}^2 & . & & : \\ : & . & . & . & : \\ : & & . & 1/\sigma_{aN}^2 & 0 \\ 0 & .. & .. & 0 & 1/\sigma_{bN}^2 \end{bmatrix}$$

$$\sigma_{a\,n}^2 = \sigma_{b\,n}^2 = \frac{1}{C/N_{0\,estimé\,n}}$$

Après la résolution on corrige les angles d'Euler estimés a priori :

$$\begin{bmatrix} \varphi_{estimé} \\ \theta_{estimé} \\ \psi_{estimé} \end{bmatrix} = \begin{bmatrix} \varphi_{estimé\ précédent} \\ \theta_{estimé\ précédent} \\ \psi_{estimé\ précédent} \end{bmatrix} + \begin{bmatrix} d\varphi_{estimé} \\ d\theta_{estimé} \\ d\psi_{estimé} \end{bmatrix}$$

En variante des moindres carrés, on peut utiliser une résolution par filtre de Kalman (étendu), comme suit :

Etat :

$$\text{Réel} : X_i = \begin{bmatrix} \varphi_i \\ \theta_i \\ \psi_i \end{bmatrix} \qquad \text{Estimé} : X_{i/i} = \begin{bmatrix} \varphi_{estimé\ i} \\ \theta_{estimé\ i} \\ \psi_{estimé\ i} \end{bmatrix} \qquad \text{à l'instant i}$$

Initialisation :

$$X_{0/0} = \begin{bmatrix} \varphi_{estimé\ initial} \\ \theta_{estimé\ initial} \\ \psi_{estimé\ initial} \end{bmatrix} \qquad P_{0/0} = \begin{bmatrix} \infty & 0 & 0 \\ 0 & \infty & 0 \\ 0 & 0 & \infty \end{bmatrix}$$

Propagation :

$$X_{i/i-1} = X_{i-1/i-1} \qquad\qquad \text{Vecteur d'état propagé}$$

$$P_{i/i-1} = P_{i-1/i-1} + Q_i \qquad\qquad \text{Matrice de covariance propagée}$$

$$Q_i = \begin{bmatrix} q_\varphi & 0 & 0 \\ 0 & q_\theta & 0 \\ 0 & 0 & q_\psi \end{bmatrix} \qquad\qquad \text{Bruit d'état}$$

Le bruit d'état est choisi en fonction de la dynamique sur l'attitude du porteur.

Recalage :

$$Y_i = \begin{bmatrix} d\alpha_1 \\ d\beta_1 \\ : \\ d\alpha_N \\ d\beta_N \end{bmatrix} \qquad H_i = \begin{bmatrix} a_{1,1} & a_{1,2} & a_{1,3} \\ b_{1,2} & b_{1,2} & b_{1,3} \\ : & : & : \\ a_{N,1} & a_{N,2} & a_{N,3} \\ b_{N,1} & b_{N,2} & b_{N,3} \end{bmatrix}$$

$$R_i = \begin{bmatrix} \sigma_{a1}^2 & 0 & .. & .. & 0 \\ 0 & \sigma_{b1}^2 & . & & : \\ : & . & . & . & : \\ : & & . & \sigma_{aN}^2 & 0 \\ 0 & .. & .. & 0 & \sigma_{bN}^2 \end{bmatrix}$$

L'innovation $Y_i = Z_i - HX_{i/i\text{-}1}$ est déjà contenue dans les discriminateurs, il n'est pas nécessaire de la recalculer.

$$K_i = (H_i P_{i/i-1} H_i^T + R_i)^{-1} P_{i/i-1} H_i^T \qquad \text{Gain de recalage}$$

$$X_{i/i} = X_{i/i-1} + K_i.Y_i \qquad \text{Vecteur d'état recalé}$$

$$P_{i/i} = (Id - K_i H_i).P_{i/i-1} \qquad \text{Matrice de covariance recalée}$$

Le synoptique de la figure 11 illustre ce qui précède

Sur la figure 12 est illustré un récepteur 10 de signaux d'un système de navigation par satellites, muni d'une antenne 11 à capteurs à rayonnement contrôlé, comprenant, pour chaque satellite :

- des moyens de calcul 12 de la position du satellite dans un premier repère TGL centré sur le récepteur à partir de la position du récepteur et de la position du satellite;
- des moyens de détermination 13 de l'attitude de l'antenne dans le premier repère
- des moyens de détermination 14 des premiers angles de site et d'azimut du satellite dans un deuxième repère lié à l'antenne, à partir de la position du satellite dans le premier repère et de l'attitude de l'antenne dans le premier repère;
- des moyens de détermination 15 des deuxièmes angles de site et d'azimut du satellite dans le deuxième repère, par recherche itérative d'un maximum d'une somme complexe pondérée des signaux démodulés reçus par l'antenne;
- des moyens de calcul 16 de la valeur d'une fonction de vraisemblance entre les premiers angles de site et d'azimut du satellite et les deuxièmes angles de site et d'azimut du satellite; et
- des moyens de détection 17 d'un risque de réception de signaux leurrés lorsque ladite valeur de la fonction de vraisemblance est inférieure à un seuil.

Un tel récepteur met en oeuvre le procédé précédemment décrit.

Dans la présente demande, les notations utilisées ont pour définitions :

$$\text{expi}(\varphi) = \exp(j.\varphi) = e^{j\varphi} \qquad (j^2 = -1)$$

Définitions :

$F_r$ : Fréquence résiduelle des signaux numérisés en bande de base ($F_r$ petit devant Fe)

$Dop_n$ : Doppler sur le signal satellite n

$\varphi_{m,n}$ : Déphasage du signal satellite n sur le capteur m

$C_n( t )$ : code d'étalement du satellite n

$Ret_n$ : retard du signal satellite n

$R(\tau)$ : Fonction d'autocorrélation du code

$$R(\tau) = 1 - |\tau| \quad si \ |\tau|<1 \qquad R(\tau=0) = 1$$

$$R(\tau) = 0$$

sinon

$$R_{n,n}(\tau) = {}^1/_L \int_{[kL, \ (k+1)L]} C_n(u) . C_n(u + \tau) \ du = R(\tau) \text{ pour L grand (>1000) et quel que soit k}$$

$$R_{n,p}(\tau) = {}^1/_L \int_{[kL, \ (k+1)L]} C_n( u ) . C_p( u + \tau ) \ du \cong 0 \qquad si \ p \neq n$$

Signaux reçus :

Le signal reçu sur l'antenne est la somme des signaux reçus des satellites visibles plus du bruit

$$S_{reçu \ m} (t) = \Sigma_{n=1,..,N} \ S_{reçu \ m,n} (t) + bruit$$

Signal reçu du satellite n sur le capteur m :

$$S_{reçu \ m,n} (t) = A.expi( \ \varphi_{porteuse \ reçu \ m,n}(t)) . C_n( \varphi_{code \ reçu \ n}(t) )$$

$$S_{reçu \ m,n} (t) = A.expi( \ 2\pi.(F_r+Dop_n).t + \theta_{m,n} ) . C_n( F_{code}.(t+Ret_n) )$$

Signal local dans le canal n :

$$S_{local \ n} (t) = expi( -\varphi_{porteuse \ locale \ n}(t) ) . C_n( \varphi_{code \ local \ n}(t) )$$

$$S_{local \ n} (t) = expi( -2\pi.(F_r+Dop_n).t - \theta_n ) . C_n( F_{code}.(t+Ret_n) + \tau )$$

Corrélations :

$$Z_{m,n} = {}^1\!/_T \int_{[kT,\,(k+1)T]} S_{\text{reçu }m}(t) \cdot S_{\text{local }n}(t)\, dt$$

T : temps d'intégration cohérent (typiquement T = 20 ms)

Les codes satellites étant décorrélés ($R_{n,p}(\tau) \cong 0$) on peut écrire :

$$Z_{m,n}(k) = {}^1\!/_T \int_{[kT,\,(k+1)T]} S_{\text{reçu }m,n}(t) \cdot S_{\text{local }n}(t)\, dt \; + \; \text{bruit}$$

$$Z_{m,n}(k) = {}^1\!/_T \int_{[kT,\,(k+1)T]} \exp i(\, \varphi_{\text{port reçue }m,n}(t) - \varphi_{\text{port locale }n}(t)\, ) \cdot C_n(\, \varphi_{\text{code reçu }n}(t)\, ) \cdot C_n(\, \varphi_{\text{code local }n}(t)\, )\, dt$$

$$Z_{m,n}(k) = A \cdot \exp i(\, \theta_{m,n} - \theta_n\, ) \cdot {}^1\!/_L \int_{[kL,\,(k+1)L]} C_n(\, u + \tau\, ) \cdot C_n(\, u\, )\, du + \text{bruit}$$

$$Z_{m,n}(k) = A \cdot \exp i(\, \theta_{m,n} - \theta_n\, ) \cdot R(\tau) + \text{bruit}$$

On suppose que le code local du canal n est en phase avec le code reçu du satellite n, grâce à la boucle de code, réalisée suivant l'état de l'art. D'où $\tau = 0$ et $R(\tau) = 1$ $Z_{m,n}(k) = A \cdot \exp i(\theta_{m,n} - \theta_n) + \text{bruit}$

**Revendications**

1. Procédé de détection de signaux destinés à leurrer un récepteur de signaux d'un système de navigation par satellites, le récepteur étant muni d'une antenne à capteurs à rayonnement contrôlé, **caractérisé en ce qu'**il comprend les étapes suivantes consistant à, pour chaque satellite :

   - calculer (1) la position du satellite dans un premier repère Trièdre Géographique Local d'acronyme TGL centré sur le récepteur à partir de la position du récepteur et de la position du satellite;
   - déterminer (2) l'attitude de l'antenne dans le premier repère;
   - calculer (3) des premiers angles de site et d'azimut du satellite dans un deuxième repère lié à l'antenne, à partir de la position du satellite dans le premier repère et de l'attitude de l'antenne dans le premier repère;
   - déterminer (4) des deuxièmes angles de site et d'azimut du satellite dans le deuxième repère, par recherche itérative d'un maximum d'une somme complexe pondérée des signaux démodulés reçus par l'antenne;
   - calculer (5) la valeur d'une fonction de vraisemblance entre les premiers angles de site et d'azimut du satellite et les deuxièmes angles de site et d'azimut du satellite; et
   - détecter (6) un risque de réception de signaux leurrés lorsque ladite valeur de la fonction de vraisemblance est inférieure à un seuil.

2. Procédé selon la revendication 1, dans lequel ladite recherche itérative d'un maximum d'une somme complexe pondérée des signaux démodulés reçus par l'antenne est effectuée à partir d'un discriminateur d'angle de site et d'un discriminateur d'angle d'azimut.

3. Procédé selon la revendication 1 ou 2, dans lequel l'étape de détermination (2) de l'attitude de l'antenne dans le premier repère utilise des données fournies par une référence inertielle.

4. Procédé selon la revendication 1 ou 2, dans lequel l'étape de détermination (2) de l'attitude de l'antenne dans le premier repère utilise ladite détermination (4) des deuxièmes angles de site et d'azimut des satellites dans le deuxième repère et procède par une recherche itérative des angles d'attitude de l'antenne donnant le minimum de la fonction de vraisemblance.

**5.** Procédé selon la revendication 1 ou 2, dans lequel l'étape de détermination (2) de l'attitude de l'antenne dans le premier repère procède par une recherche itérative des angles d'attitude de l'antenne donnant le maximum d'énergie après les sommes pondérées en sortie des corrélateurs des canaux de traitement respectivement associés aux satellites.

**6.** Procédé selon la revendication 5, dans lequel ladite maximisation utilise une méthode de résolution par les moindres carrés.

**7.** Procédé selon la revendication 5, dans lequel ladite maximisation utilise une méthode de résolution par filtrage de Kalman.

**8.** Procédé selon la revendication 6 ou 7, dans lequel on utilise des discriminateurs de cosinus directeurs représentatifs de la position des satellites dans le deuxième repère lié à l'antenne.

**9.** Procédé selon la revendication 8, dans lequel on utilise une méthode à modèle d'observation de la relation entre les cosinus directeurs des directions des satellites et les angles d'Euler des directions des satellites.

**10.** Récepteur (10) de signaux d'un système de navigation par satellites, muni d'une antenne (11) à capteurs à rayonnement contrôlé, **caractérisé en ce qu'**il comprend, pour chaque satellite :

- des moyens de calcul (12) de la position du satellite dans un premier repère TGL centré sur le récepteur à partir de la position du récepteur et de la position du satellite;
- des moyens de détermination (13) de l'attitude de l'antenne dans le premier repère
- des moyens de détermination (14) des premiers angles de site et d'azimut du satellite dans un deuxième repère lié à l'antenne, à partir de la position du satellite dans le premier repère et de l'attitude de l'antenne dans le premier repère;
- des moyens de détermination (15) des deuxièmes angles de site et d'azimut du satellite dans le deuxième repère, par recherche itérative d'un maximum d'une somme complexe pondérée des signaux démodulés reçus par l'antenne;
- des moyens de calcul (16) de la valeur d'une fonction de vraisemblance entre les premiers angles de site et d'azimut du satellite et les deuxièmes angles de site et d'azimut du satellite; et
- des moyens de détection (17) d'un risque de réception de signaux leurrés lorsque ladite valeur de la fonction de vraisemblance est inférieure à un seuil.

**Patentansprüche**

**1.** Verfahren zum Nachweis von Signalen, die zum Täuschen eines Signalempfängers eines Satellitennavigationssystems bestimmt sind, wobei der Empfänger mit einer Antenne mit Sensoren mit kontrollierter Strahlung ausgestattet ist, **dadurch gekennzeichnet, dass** es die folgenden Schritte umfasst, die für jeden Satelliten darin bestehen:

- Berechnen (1) der Position des Satelliten in einem ersten lokalen geografischen Bezugssystem-Trieder (TGL), der aus der Position des Empfängers und der Position des Satelliten auf den Empfänger zentriert ist,
- Bestimmen (2) der Stellung der Antenne im ersten Bezugssystem,
- Berechnen (3) der ersten Elevations- und Azimutwinkel des Satelliten in einem zweiten, mit der Antenne verbundenen Bezugssystem, ausgehend von der Position des Satelliten im ersten Bezugssystem und der Stellung der Antenne im ersten Bezugssystem,
- Bestimmen (4) der zweiten Elevations- und Azimutwinkel des Satelliten im zweiten Bezugssystem durch iterative Ermittlung eines Maximums einer gewichteten komplexen Summe der demodulierten, von der Antenne empfangenen Signale,
- Berechnen (5) des Werts einer Wahrscheinlichkeitsfunktion zwischen den ersten Elevations- und Azimutwinkeln des Satelliten und den zweiten Elevations- und Azimutwinkeln des Satelliten, und
- Ermitteln (6) eines Empfangsrisikos von Täuschsignalen, wenn der Wert der Wahrscheinlichkeitsfunktion unter einem Grenzwert ist.

**2.** Verfahren nach Anspruch 1, wobei die iterative Ermittlung eines Maximums einer gewichteten komplexen Summe der demodulierten, von der Antenne empfangenen Signale ausgehend von einem Elevationswinkeldiskriminator und einem Azimutwinkeldiskriminator durchgeführt wird.

**3.** Verfahren nach Anspruch 1 oder 2, wobei der Bestimmungsschritt (2) der Stellung der Antenne im ersten Bezugssystem von einem Trägheitsbezug gelieferte Daten verwendet.

**4.** Verfahren nach Anspruch 1 oder 2, wobei der Bestimmungsschritt (2) der Stellung der Antenne im ersten Bezugssystem die Bestimmung (4) der zweiten Elevations- und Azimutwinkel der Satelliten im zweiten Bezugssystem verwendet und aus einer iterativen Ermittlung der Stellungswinkel der Antenne hervorgeht, woraus sich das Minimum der Wahrscheinlichkeitsfunktion ergibt.

**5.** Verfahren nach Anspruch 1 oder 2, wobei der Bestimmungsschritt (2) der Stellung der Antenne im ersten Bezugssystem aus einer iterativen Ermittlung der Stellungswinkel der Antenne hervorgeht, woraus sich nach den gewichteten Summen am Ausgang der Komelatoren der jeweiligen, den Satelliten zugeordneten Verarbeitungskanälen das Energiemaximum ergibt.

**6.** Verfahren nach Anspruch 5, wobei die Maximierung eine Lösungsmethode der kleinsten Quadrate verwendet.

**7.** Verfahren nach Anspruch 5, wobei die Maximierung eine Lösungsmethode durch Kalman-Filter verwendet.

**8.** Verfahren nach Anspruch 6 oder 7, wobei Cosinus-Lenkdiskiiminatoren verwendet werden, die für die Position der Satelliten im zweiten, mit der Antenne verbundenen Bezugssystem repräsentativ sind.

**9.** Verfahren nach Anspruch 8, wobei eine Observationsmodellmethode des Verhältnisses zwischen den Lenkcosinus der Richtungen der Satelliten und den Euler-Winkeln der Richtungen der Satelliten verwendet wird.

**10.** Empfänger (10) von Signalen eines Satellitennavigationssystems, ausgestattet mit einer Antenne (11) mit Sensoren mit kontrollierter Strahlung, **dadurch gekennzeichnet, dass** er für jeden Satelliten umfasst:

- Berechnungsmittel (12) der Position des Satelliten in einem ersten TGL-Bezugssystem, der aus der Position des Empfängers und der Position des Satelliten auf den Empfänger zentriert ist,
- Bestimmungsmittel (13) der Stellung der Antenne im ersten Bezugssystem,
- Bestimmungsmittel (14) der ersten Elevations- und Azimutwinkel des Satelliten in einem zweiten, mit der Antenne verbundenen Bezugssystem, ausgehend von der Position des Satelliten im ersten Bezugssystem und der Stellung der Antenne im ersten Bezugssystem,
- Bestimmungsmittel (15) der zweiten Elevations- und Azimutwinkel des Satelliten im zweiten Bezugssystem durch iterative Ermittlung eines Maximums einer gewichteten komplexen Summe der demodulierten, von der Antenne empfangenen Signale,
- Berechnungsmittel (16) des Werts einer Wahrscheinlichkeitsfunktion zwischen den ersten Elevations- und Azimutwinkeln des Satelliten und den zweiten Elevations- und Azimutwinkeln des Satelliten, und
- Ermittlungsmittel (17) eines Empfangsrisikos von Täuschsignalen, wenn der Wert der Wahrscheinlichkeitsfunktion unter einem Grenzwert ist.

**Claims**

**1.** A method for detecting signals intended as a decoy for a receiver of signals from a satellite navigation system, the receiver being equipped with an antenna using controlled reception pattern sensors, **characterised in that** it comprises the following steps consisting of, for each satellite:

- calculating (1) the position of the satellite in a first Local Geographic Trihedron - acronym LGT - reference frame centred on the receiver based on the position of the receiver and on the position of the satellite;
- determining the attitude (2) of the antenna in the first reference frame;
- calculating (3) first elevation and azimuthal angles of the satellite in a second reference frame linked to the antenna, starting from the position of the satellite in the first reference frame and from the attitude of the antenna in the first reference frame;
- determining (4) second elevation and azimuthal angles of the satellite in the second reference frame, by iterative search for a maximum of a weighted complex sum of the demodulated signals received by the antenna;
- calculating (5) the value of a likelihood function between the first elevation and azimuthal angles of the satellite and the second elevation and azimuthal angles of the satellite; and
- detecting (6) a risk of receiving decoy signals when said value of the likelihood function is lower than a threshold.

**2.** The method according to Claim 1, wherein said iterative search for a maximum of a weighted complex sum of the demodulated signals received by the antenna is carried out using an elevation angle discriminator and an azimuthal angle discriminator.

**3.** The method according to Claim 1 or 2, wherein the step (2) for determining the attitude of the antenna in the first reference frame uses data supplied by an inertial reference.

**4.** The method according to Claim 1 or 2, wherein the step (2) for determining the attitude of the antenna in the first reference frame uses said determination (4) of the second elevation and azimuthal angles of the satellites in the second reference frame and carries out an iterative search for the attitude angles of the antenna yielding the minimum of the likelihood function.

**5.** The method according to Claim 1 or 2, wherein the step (2) for determining the attitude of the antenna in the first reference frame carries out an iterative search for the attitude angles of the antenna yielding the maximum energy after the weighted sums at the output of the correlators of the processing channels respectively associated with the satellites.

**6.** The method according to Claim 5, wherein said maximisation uses a least squares solution method.

**7.** The method according to Claim 5, wherein said maximisation uses a method for solution by Kalman filtering.

**8.** The method according to Claim 6 or 7, wherein direction cosine discriminators representative of the position of the satellites in the second reference frame linked to the antenna are used.

**9.** The method according to Claim 8, wherein a method based on an observational model of the relationship between the direction cosines of the directions of the satellites and the Euler angles of the directions of the satellites is used.

**10.** A receiver (10) of signals from a satellite navigation system, equipped with an antenna (11) using controlled reception pattern sensors, **characterised in that** it comprises, for each satellite:

- means (12) for calculating the position of the satellite in a first LGT reference frame centred on the receiver using the position of the receiver and the position of the satellite;
- means (13) for determining the attitude of the antenna in the first reference frame;
- means (14) for determining first elevation and azimuthal angles of the satellite in a second reference frame linked to the antenna, starting from the position of the satellite in the first reference frame and from the attitude of the antenna in the first reference frame;
- means (15) for determining second elevation and azimuthal angles of the satellite in the second reference frame, by iterative search for a maximum of a weighted complex sum of the demodulated signals received by the antenna;
- means (16) for calculating the value of a likelihood function between the first elevation and azimuthal angles of the satellite and the second elevation and azimuthal angles of the satellite; and
- means (17) for detecting a risk of receiving decoy signals when said value of the likelihood function is lower than a threshold.

Calculer la position du satellite dans un premier repère TGL centré sur le récepteur à partir de la position du récepteur et de la position du satellite — 1

Déterminer l'attitude de l'antenne dans le premier repère — 2

Calculer des premiers angles de site et d'azimut du satellite dans un deuxième repère lié à l'antenne à partir de la position du satellite dans le premier repère et l'attitude de l'antenne dans le deuxième repère — 3

Calculer des deuxièmes angles de site et d'azimut du satellite dans le deuxième repère, par recherche itérative d'un maximum d'une somme complexe pondérée des signaux démodulés reçus par l'antenne — 4

Calculer la valeur d'une fonction de vraisemblance entre les premiers et deuxièmes angles de site et d'azimut du satellite — 5

Détecter un risque de réception de signaux leurrés lorsque la valeur de la fonction de vraisemblance est inférieure à un seuil — 6

## FIG.1

FIG.2

FIG.3

**Traitement du signal - Canal satellite n**

*Matériel (Fe > 50 MHz)*    *Logiciel (Fw = 50 Hz)*

$S_{capt\,1}(t)$ → Int & Dump → $Z_{P1}$, $Z_{\Delta1}$

$S_{capt\,2}(t)$ → Int & Dump → $Z_{P2}$, $Z_{\Delta2}$

$S_{capt\,m}(t)$ → Int & Dump → $Z_{Pm}$, $Z_{\Delta m}$

$S_{capt\,M}(t)$ → Int & Dump → $Z_{PM}$, $Z_{\Delta M}$

code delta

Somme pondérée $C_n(\psi,\theta,\varphi)$ → $Z_P$ → Discriminateur de phase

Somme pondérée $C_n(\psi,\theta,\varphi)$ → $Z_\Delta$ → Discriminateur de code

$\psi,\theta,\varphi$ Attitude estimée

$e^{i\varphi}$ | code

Signaux capteurs numérisés (M signaux)

$\varphi_{code}$ → NCO code

$\varphi_{porteuse}$ → NCO porteuse

Commande NCO code → $1/L_{chip}$ → ⊕ → Correcteur de boucle de code (DLL)

Commande NCO porteuse → $1/\lambda$ → Correcteur de boucle de phase (PLL)

FIG.4

EP 2 784 547 B1

FIG.5

EP 2 784 547 B1

FIG.6

FIG.7

**FIG.8**

**FIG.9**

Initialisation : i = 0

$$\begin{bmatrix} \psi_0 \\ \theta_0 \\ \varphi_0 \end{bmatrix} = \begin{bmatrix} route \\ 0 \\ 0 \end{bmatrix} \qquad \vec{Grad}\Phi_0 = \begin{bmatrix} 0 \\ 0 \\ 0 \end{bmatrix}$$

i = i+1

Calcul de $(\psi_i, \theta_i, \varphi_i)$ :

$$\begin{bmatrix} \psi_i \\ \theta_i \\ \varphi_i \end{bmatrix} = \begin{bmatrix} \psi_{i-1} \\ \theta_{i-1} \\ \varphi_{i-1} \end{bmatrix} - \Phi(\psi_{i-1}, \theta_{i-1}, \varphi_{i-1}).\vec{Grad}\Phi_{i-1} / \left\| \vec{Grad}\Phi_{i-1} \right\|^2$$

Calcul des sommes des résidus au carré :

$$\Phi(\psi_i \quad, \theta_i \quad, \varphi_i)$$

$$\Phi(\psi_i + d\psi, \theta_i, \varphi_i)$$

$$\Phi(\psi_i, \theta_i + d\theta, \varphi_i)$$

$$\Phi(\psi_i, \theta_i, \varphi_i + d\varphi)$$

Calcul du Gradient :

$$\vec{Grad}\Phi_n = \begin{bmatrix} \dfrac{\Phi(\psi_i + d\psi, \theta_i, \varphi_i) - \Phi(\psi_i, \theta_i, \varphi_i)}{d\psi} \\ \dfrac{\Phi(\psi_i, \theta_i + d\theta, \varphi_i) - \Phi(\psi_i, \theta_i, \varphi_i)}{d\theta} \\ \dfrac{\Phi(\psi_i, \theta_i, \varphi_i + d\varphi) - \Phi(\psi_i, \theta_i, \varphi_i)}{d\varphi} \end{bmatrix}$$

NON

Condition de convergence :

$$\left\| \vec{Grad}\,\Phi_i \right\| < Seuil$$

OUI

Résultat :

$$(\hat{\psi}, \hat{\theta}, \hat{\varphi}) = (\psi_i, \theta_i, \varphi_i)$$

FIG.10

Signaux reçus

Traitement du signal

Estimation des angles d'Euler

$D_{a\,n}(\alpha_n,\beta_n)$
$D_{b\,n}(\alpha_n,\beta_n)$

Calcul des pondérations

Moindres-carrés
ou
Filtre de Kalman

Calcul des $(\alpha_n,\beta_n)$

$a_{n,j}$
$b_{n,j}$
$(\psi,\theta,\phi)_{estimés}$

Direction des satellites en TGL

## FIG.11

11

10

12

14

13

16

15

## FIG.12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7912643 B1

- FR 2972809

**Littérature non-brevet citée dans la description**

- **ALISON BROWN ; SHERYL ATTERBERG ; NEIL GEREIN.** Detection and Location of GPS Interferencesources using digital receiver electronics. *Proceedings of the IAIN World Congress and the Institute of Navigation*